# EUROPÄISCHE PATENTSCHRIFT

(11) **EP 2 281 132 B1**
(45) Veröffentlichungstag und Bekanntmachung des Hinweises auf die Patenterteilung: **28.03.2012**
(21) Anmeldenummer: 09757208.5
(22) Anmeldetag: 27.05.2009
(51) Int. Cl.: F16K 1/44, B67D 7/34, B67D 7/36

(54) **VORRICHTUNG ZUR VERROHRUNG VON PROZESSANLAGEN DER NAHRUNGSMITTEL- UND GETRÄNKEINDUSTRIE**
DEVICE FOR INSTALLING PIPING IN PROCESS PLANTS IN THE FOOD AND BEVERAGE INDUSTRY
SYSTÈME DE TUYAUTERIE POUR DES INSTALLATIONS DE TRAITEMENT DES INDUSTRIES ALIMENTAIRES ET DES BOISSONS

(30) Priorität: 30.05.2008 DE 102008026149; 31.07.2008 DE 102008035940; 15.10.2008 DE 102008051819
(43) Veröffentlichungstag der Anmeldung: 09.02.2011
(60) Teilanmeldung: 11008568.5
(73) Patentinhaber: GEA Tuchenhagen GmbH, 21514 Büchen (DE)
(72) Erfinder: BURMESTER, Jens, 23883 Grambek (DE); SUEDEL, Matthias, 23626 Ratekau (DE)
(74) Vertreter: Hauck Patent- und Rechtsanwälte
(86) Internationale Anmeldenummer: PCT/EP2009/003771
(87) Internationale Veröffentlichungsnummer: WO 2009/146825

(56) Entgegenhaltungen:
- WO-A-93/16307
- WO-A-98/54494
- DE-A1-102005 051 467
- DE-C1- 10 108 259

## Beschreibung

### TECHNISCHES GEBIET

Die Erfindung betrifft ein Verrohrungssystem für Prozessanlagen der Nahrungsmittel- und Getränkeindustrie nach dem Oberbegriff des Anspruchs 1, wobei diese Verrohrungssysteme insbesondere dort Anwendung finden, wo die der Produktbearbeitung und dem Produkttransfer dienenden Prozessanlagen hohen mikrobiologischen Qualitätsanforderungen und Forderungen nach bester Reinigungsfähigkeit im Durchfluss (sog. CIP-Fähigkeit) unterliegen. Die Anwendung schließt auch Bereiche insbesondere der Pharmazie und der Biotechnologie ein.

### STAND DER TECHNIK

Der Prototyp eines solchen Verrohrungssystems ist zum Beispiel aus der DE101 08 259 C1 bekannt, wobei dieses allerdings auf eine Verrohrungsanordnung beschränkt ist, bei der ein sogenannter Ventilverteilerbaum einem Tank eines Tanklagersystems zugeordnet ist, unmittelbar aus dessen Tankboden ausmündet und einen von unten nach oben aufsteigenden, im Regelfall einen senkrechten Verlauf aufweist. Dabei sind die Prozessleitungen und Funktionsventile direkt unter dem jeweiligen Tankauslauf angebracht. Dieses Verrohrungssystem hat sich zwischenzeitlich in der Praxis bewährt; es ist in der Firmendruckschrift **GEA Tuchenhagen Brewery Systems, ECO-Matrix^{®}, 223d-10/06**, unter der Bezeichnung ECO-Matrix^{®} und insbesondere unter dem Aspekt der Wirtschaftlichkeit und des Einflusses auf die Produktqualität näher beschrieben.

Bei dem vorgenannten Verrohrungssystem können die Funktionsventile entweder seitlich am Tankauslaufbaum, dem sog. Ventilverteilerbaum, oder senkrecht am Bodenflansch des Tanks befestigt werden. Diese Verrohrungstechnik minimiert deutlich die Entstehung von Kontamination und deren spätere Verteilung im Prozesssystem. Das vom Tank getrennt aufgebaute Rohrleitungssystem ermöglicht eine vollständige Produktentleerung und eine vom Tank unabhängige Reinigung. Im Vergleich zu den traditionellen Systemen mit vom Tank entfernt angeordneten sog. Ventilmatrixsystemen, bei denen eine Vielzahl von Ventilen zur Schaltung der vielfältigen Rohrleitungen des jeweiligen Prozesses in sog. Ventilblöcken zusammengefasst sind, verringert sich bei dieser neueren Verrohrungstechnik der instrumentelle Aufwand, während der Prozess für einen nahezu verlustfreien Produktionsbetrieb optimiert werden kann.

Der Ventilverteilerbaum ist als langgestreckter Hohlkörper ausgebildet, er ist im Wesentlichen senkrecht orientiert und er besitzt Anschlussöffnungen zum Verbinden seines Innenraumes mit Rohrleitungen eines Rohrsystems, die seitlich an dem Ventilverteilerbaum vorbeigeführt sind. In jeder Verbindung zwischen der Rohrleitung und der zugeordneten Anschlussöffnung ist ein in seinem Sitzbereich vermischungssicher ausgestaltetes Ventil angeordnet, das diese Verbindung in unmittelbarer Nähe zum Hohlkörper schaltet. Als vermischungssicheres Ventil kann dabei jeweils ein sog. Doppelsitzventil mit zwei relativ zueinander bewegbaren Schließgliedern oder ein sog. Doppeldichtventil mit zwei auf einem einzigen Schließglied in Hubrichtung beabstandeten Sitzdichtungen oder ein sog. leckagegesichertes Scheibenventil zur Anwendung kommen. Zwischen den axial beabstandeten Abdichtungsstellen des vermischungssicheren Ventils befindet sich ein Leckagehohlraum, der über wenigstens einen Verbindungsweg mit der Umgebung des Doppelsitzventils verbunden ist.

Als bevorzugtes vermischungssicheres Ventil findet in den in Rede stehenden Verrohrungssystemen bislang das vorg. Doppelsitzventil Verwendung, wobei letzteres konzentrisch ineinander angeordnete Ventilstangen für die Schließglieder aufweist, die einseitig durch das Ventilgehäuse hindurch- und aus diesem zu einem Antrieb herausgeführt sind. Ein Doppelsitzventil mit einer diesbezüglichen Schließglied- und Ventilstangenkonfiguration ist bereits aus der US 4 436 106 A bekannt. Der zwischen den beiden Schließgliedern angeordnete Leckagehohlraum wird dabei über einen Leckageablauf zwischen der Ventilstange des unabhängig angetriebenen ersten Schließgliedes und einer die Ventilstange umgebenden Hohlstange des abhängig angetriebenen zweiten Schließgliedes drainiert. Das zweite Schließglied ist dabei als Sitzteller in Form einer konischen Schließhülse ausgebildet, die an ihrem dem ersten Schließglied zugewandten Ende eine axiale Sitzdichtung trägt, die mit einem Ventilsitz am Ventilgehäuse zusammenwirkt. Das erste Schließglied ist gleichfalls als Sitzteller ausgebildet, der mit einem konischen Ventilsitz zusammenwirkt.

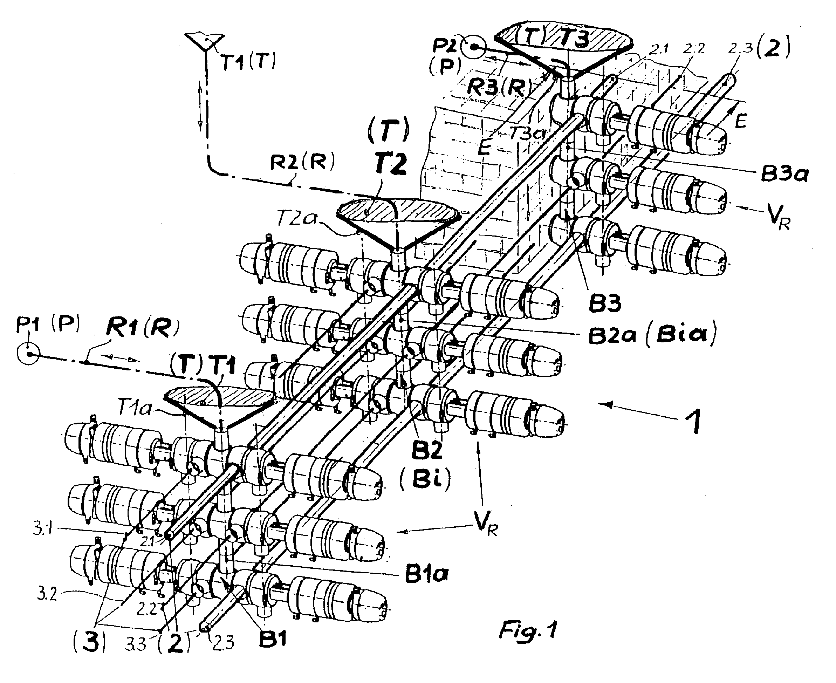

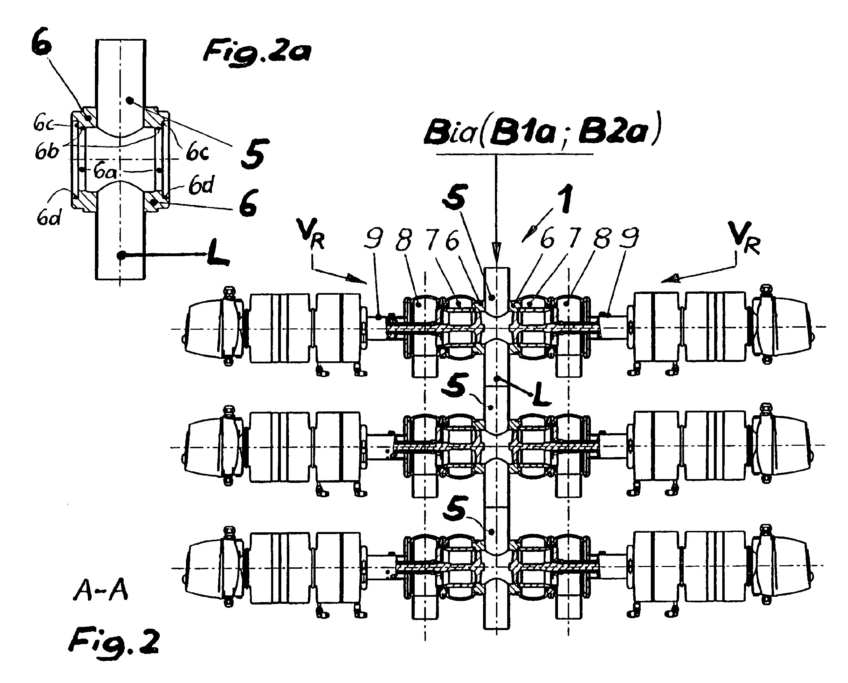

In der EP 0 625 250 B1 ist ein dem Doppelsitzventil gemäß der US 4 436 106 A gattungsgleiches Doppelsitzventil beschrieben, bei dem das erste Schließglied mit einem radialen Dichtungsmittel und das zweite Schließglied mit dem bekannten axialen Dichtungsmittel ausgebildet sind. Dabei findet das radiale Dichtungsmittel in der Schließstellung des Ventils in einer zylindrischen Sitzfläche dichtend Aufnahme und die dem ersten Schließglied zugewandte Stirnfläche des als zylinderförmige Schließhülse ausgebildeten zweiten Schließgliedes trägt die auf eine Sitzfläche am Ventilgehäuse wirkende axiale Sitzdichtung. In der EP 0 625 250 B1 wird mit Blick auf die gattungsgemäßen Doppelsitzventile gemäß US 4 436 106 A darauf hingewiesen (s. Spalte 2, Z.56 bis Spalte 3, Zeile 16), dass derartige Doppelsitzventile, ausgehend von der Anordnungslage in den Figuren 1 und 2 der US 4 436 106 A, grundsätzlich in jeder beliebigen Einbaulage angeordnet werden können, also beispielsweise auch um 180 Grad gedreht, das heißt mit senkrecht nach unten orientierten Ventilstangen oder aber in waagerechter oder schrägliegender Anordnung. Bei abwärts gerichteten Ventilstangen, wobei diese Formulierung auch die Lage der Ventilstangen bei schrägliegender Anordnung einschließt, kann die Leckageflüssigkeit unter dem Einfluss der Schwerkraft eigenständig frei abfließen (über den Ringspalt zwischen der Ventilstange und der Hohlstange, **Figur 2).**

Aus der Druckschrift WO 98/54494 A1 ist ein Doppelsitzventil für die Nahrungsmittelindustrie bekannt, bei dem das hohlstangenförmige zweite Schließglied an seinem dem als Schieberkolben ausgebildeten, unabhängig betätigbaren ersten Schließglied zugewandten Endabschnitt außenseits eine axial/radial wirkende zweite Sitzdichtung und innenseits eine zylindrische Aufnahmebohrung aufweist. Der die Aufnahmebohrung aufnehmende Endabschnitt erstreckt sich ein Stück weit über die zweite Sitzdichtung hinaus und die Aufnahmebohrung ist durchmessergleich mit einer zylindrischen ersten Sitzfläche ausgebildet, die mit einer radial wirkenden ersten Sitzdichtung des ersten Schließgliedes zusammenwirkt. Durch die axiale Beabstandung der zweiten Sitzdichtung von der stirnseitigen Begrenzungsfläche des Endabschnittes des zweiten Schließgliedes sind die Sitzdichtungen und damit die zugeordneten Sitzflächen nicht unmittelbar aneinandergrenzend, sondern durch einen relativ langen, gewinkelten Spalt miteinander verbunden. In der Schließstellung des zweiten Schließgliedes gehen die Aufnahmebohrung und die erste Sitzfläche bündig ineinander über.

Eine in der DE 10 2005 051 46T A1 beschriebene gattungsbildende Rohrverzweigungsanordnung geht von einem Verrohrungssystem gemäß DE 101 08 259 C1 aus und ordnet in diesem System an den Anschlüssen des Hohlkörpers jeweils ein vermischungssicheres Ventil an, bei dem das erste Schließglied unabhängig angetrieben ist und bei seiner Offnungsbewegung am als Sitzteller ausgebildeten zweiten Schließglied dichtend zur Anlage kommt und dieses gleichfalls in die Offenstellung überführt. Das zweite Schließglied weist an seinem dem ersten Schließglied zugewandten Ende eine zweite Sitzdichtung auf, die mit einer an eine zylindrische erste Sitzfläche angrenzenden zweiten Sitzfläche zusammenwirkt. Das als Schieberkolben ausgebildete erste Schließglied besitzt eine radial wirkende erste Sitzdichtung, die in der Schließstellung des Ventils in der ersten Sitzfläche dichtend Aufnahme findet. Die Ventilstangen für die Schließglieder sind konzentrisch ineinander angeordnet und einseitig durch das Ventilgehäuse hindurchund aus diesem herausgeführt.

Dabei ist das Ventil der DE 10 2005 051 467 A1**,** in gleicher Weise wie es die EP 0 625 250 B1 mit Blick auf die US 4 436 106 A unter dem Gesichtspunkt der generell möglichen Einbaulage offenbart, in schrägliegender Anordnung am Hohlkörper angeordnet und es besitzt, zusätzlich zum radialen Dichtungsmittel am ersten Schließglied und dem axialen Dichtungsmittel am zweiten Schließglied, eine sog. Mitteldichtung, die in der Offenstellung des Doppelsitzventils zwischen den beiden Schließgliedern wirksam und am zweiten Schließglied angeordnet ist. Durch die schrägliegende Anordnung wird erreicht, dass der Leckagehohlraum des Ventils eine sich von einem anschlussseitigen Eintritt bis zu einer vom Eintritt beabstandeten austrittsseitigen Leckageaustrittsöffnung erstreckende Umfangswand aufweist, die schwerkraftseitig zur Leckageaustrittsöffnung hin ein Gefälle aufweist. Zweck dieser Maßnahme ist eine selbsttätige Entleerung des Leckagehohlraums von sich dort ansammelnder Leckageflüssigkeit.

Die bekannte Rohrverzweigungsanordnung nach der DE 10 2005 051 467 A1 ist, ebenso wie das Verrohrungssystem nach der DE 101 08 259 C1**,** auf eine Anordnung beschränkt, bei der der Hohlkörper (Ventilverteilerbaum) einem Tank eines Tanklagersystems zugeordnet ist und unmittelbar aus dessen Tankboden ausmündet. Die Selbstentleerung des Leckagehohlraumes ist ausschließlich dann gegeben (DE 10 2005 051 467 A1), wenn das Doppelsitzventil in der notwendigen schrägliegenden Anordnung am Hohlkörper angeordnet ist, d.h. wenn die Umfangswand des Leckagehohlraumes ein hinreichendes Gefälle besitzt. Dies erfordert unter Berücksichtigung der Ausbildung des zweiten Schließgliedes in Form einer konischen Schließhülse einen erheblichen Neigungswinkel der Längsachse des Doppelsitzventils gegenüber der Horizontalen. Die schrägliegende Anbindung der Doppelsitzventile am Hohlkörper erfordert an letzterem zwangsläufig jeweils radial orientierte, umlaufende Ausbuchtungen, die Totzonen für die Strömung in Längsrichtung des Hohlkörpers bilden. Dadurch kommt es bei Durchströmung des Hohlkörpers zum Abreißen der Strömung an diesen Stellen und zur Wirbelbildung. Diese Ausbuchtungen sind im Durchfluss schlecht reinigbar.

Darüber hinaus ist die sog. Mitteldichtung ein grundsätzlicher Nachteil, da diese das Ventil aufwendiger und störanfälliger macht und im Zuge der Offnungs- und Schließbewegung, insbesondere in der sog. Abholstellung des zweiten Schließgliedes durch das erste Schließglied, aufgrund der Kavernenbildung zwischen den drei Dichtungen das angestrebte möglichst leckagefrei Schalten des Doppelsitzventils verschlechtert. Weiterhin ist bei dem bekannten Doppelsitzventil die bei der jeweiligen Sitzreinigung des einen Schließgliedes entstehende Sitzreinigungsströmung auf den Dichtungsbereich des anderen in seiner Schließstellung befindlichen, in der Regel produktbeaufschlagten Schließgliedes gerichtet. Diese Direktbeaufschlagung des Sitzbereichs aus der jeweiligen Sitzreinigungsströmung ist unerwünscht, da sie zu einer Umwandlung von kinetischer Strömungsenergie in statischen Druck führt, wodurch bei defekten Sitzdichtungen Leckageströmungen des Reinigungsmittels in das produktbeaufschlagte Ventilgehäuse generiert werden.

So wird beispielsweise in den USA gefordert, dass bei größeren Dichtungsdefekten oder gar dem Verlust einer der beiden Sitzdichtungen im Zuge der Sitzreinigung des jeweils anderen Schließgliedes über den jeweiligen Dichtungsdefekt bzw. den Sitzbereich ohne Sitzdichtung kein Reinigungsmittel hindurchtreten darf. Unter diesen Bedingungen stellt sich an ein derartiges Doppelsitzventil nicht nur die Forderung nach einer Begrenzung der Reinigungsmittelmenge und Vermeidung einer Direktbeaufschlagung der Sitzbereiche im Zuge der Sitzreinigung, sondern auch nach einer möglichst verwirbelungsfreien Abfuhr der Sitzreinigungsströmung zunächst in den Leckagehohlraum und von dort in die Umgebung, ohne dass der jeweils geschlossene Sitzbereich von dieser Sitzreinigungsströmung direkt angeströmt oder druckerhöhend beaufschlagt wird. Hierbei handelt es sich um die sog. PMO-Fähigkeit, die bedeutet, dass das vermischungssichere Doppelsitzventil ohne reinigungsbedingte Unterbrechungen an 365 Tagen im Jahr in Betrieb ist und dabei jeweils einseitig sitzreinigungsfähig ist, während die jeweils andere Seite produktbeaufschlagt und damit geschlossen bleibt.

Aufgabe der Erfindung ist es, ein Verrohrungssystem der gattungsgemäßen Art zu schaffen, das bei hoher Betriebssicherheit höchsten Anforderungen an die Qualität des in ihm behandelten fluiden Produktes gerecht wird, das insgesamt, einschließlich der vermischungssicheren Ventile, einfach und kostengünstig aufgebaut ist und das bei allen in der Praxis vorkommenden Anordnungsvarianten des Ventilverteilerbaums in Bezug zum zugeordneten Prozessaggregat oder Tank der Prozessanlage im jeweiligen Ventilverteilerbaum weitestgehend die gleichen technologischen Bedingungen und Zustandsgrößen wie im Prozessaggregat oder Tank abbildet. Darüber hinaus soll eine Direktbeaufschlagung des Sitzbereichs der vermischungssicheren Ventile bei der Sitzreinigung vermieden und der Leckagehohlraum selbstentleerend ausgestaltet werden.

### ZUSAMMENFASSUNG DER ERFINDUNG

Die Aufgabe wird durch ein Verrohrungssystem mit den Merkmalen des Anspruchs 1 gelöst. Vorteilhafte Ausgestaltungen des vorgeschlagenen Verrohrungssystems gemäß der Erfindung sind Gegenstand der nachgeordneten Unteransprüche.

Der Kem der Erfindung besteht darin, dass die aus dem Rohrsystem zu- oder abzuführenden fluiden Produkte das vom Ventilverteilerbaum begrenzte hohle Gebilde auf dem Weg über Anschlussöffnungen durchströmen und dass das jeweilige Fluid in diesem hohlen Gebilde in unmittelbarer Nähe zu dessen Begrenzung von den an die zugeordnete(n) Anschlussöffnung(en) heran- und an dem hohlen Gebilde vorbeigeführten Rohrleitungen des Rohrsystems durch ein vermischungssicheres Doppelsitzventil wahlweise, schaltbar und vermischungssicher abtrennbar ist. Dabei mündet der jeweilige Ventilverteilerbaum unmittelbar im unteren Tankboden eines jeweils zugeordneten Tanks der Prozessanlage aus (erste Anordnungsvariante) oder/und der jeweilige Ventilverteilerbaum ist über eine zugeordnete Rohrverbindung mit dem zugeordneten Prozessaggregat oder Tank der Prozessanlage verbunden und der an den Ventilverteilerbaum angeschlossene Endabschnitt der Rohrverbindung verläuft senkrecht oder waagerecht oder wie auch immer geneigt (zweite Anordnungsvariante). Dadurch werden die Verrohrungssysteme für die unterschiedlichsten Anwendungen denkbar einfach.

Ein weiterer Erfindungsgedanke besteht darin, dass das zweite Schließglied als Hohlstange ausgebildet ist, die an ihrem dem ersten Schließglied zugewandten Ende eine zweite Sitzdichtung aufweist, die mit einer an eine zylindrische erste Sitzfläche angrenzenden zweiten Sitzfläche zusammenwirkt. Das als Schieberkolben ausgebildete erste Schließglied weist eine radial wirkende erste Sitzdichtung auf, die in der Schließstellung des Ventils in der ersten Sitzfläche, welche die Anschlussöffnung ausbildet, dichtend Aufnahme findet. Das hohlstangenförmige zweite Schließglied weist dabei an seinem die zweite Sitzdichtung aufnehmenden Endabschnitt innenseits eine zylindrische Aufnahmebohrung auf, die durchmessergleich mit der zylindrischen ersten Sitzfläche ausgebildet ist. Weiterhin ist erfindungsgemäß vorgesehen, dass in der Schließstellung des zweiten Schließgliedes die Aufnahmebohrung und die erste Sitzfläche bündig ineinander übergehen. Dadurch wird leckagefreies Schalten erreicht, ohne dass ein drittes Dichtungsmittel zwischen den beiden Schließgliedern erforderlich ist, wie dies bei der gattungsbildenden Rohrverzweigungsanordnung gemäß dem vorstehend beschriebenen Stand der Technik (DE 10 2005 051 467 A1) der Fall ist.

Darüber hinaus ist vorgesehen, dass das zweite Schließglied mit einer schließgliedseitigen Anschlagfläche, die radial innenseits von der zweiten Sitzdichtung angeordnet ist, über einen metallischen Anschlag an der zweiten Sitzfläche verfügt, wobei eine zugeordnete sitzflächenseitige Anschlagfläche unmittelbar an die erste Sitzfläche angrenzt. Durch diese Lösung wird eine Direktbeaufschlagung des Sitzbereichs des zweiten Schließgliedes im Zuge der Sitzreinigung des ersten Schließgliedes vermieden und der Leckagehohlraum ist selbst bei waagerechter Anordnung des Doppelsitzventils selbstentleerend ausgestaltet. Mit dieser Maßnahme wird die vorstehend erwähnte PMO-Fähigkeit des Doppelsitzventils weiter verbessert.

Eine vorteilhafte Ausführungsform sieht vor, dass bei der ersten Richtungsvariante, bei der der Ventilverteilerbaum einen von unten nach oben aufsteigenden, im Regelfall einen senkrechten Verlauf aufweist, die erste und die zweite Gruppe Rohrleitungen in jeweils reihenförmiger Anordnung untereinander und in zueinander und zur Längsachse des hohlen Gebildes parallelen Ebenen angeordnet sind. Eine derartige Verrohrung ist äußerst kompakt, raumsparend und übersichtlich.

Ein anderer Vorschlag sieht vor, dass bei der zweiten Richtungsvariante, bei der der Ventilverteilerbaum quer, im Regelfall waagerecht verläuft, die erste und die zweite Gruppe Rohrleitungen jeweils in zueinander parallelen Ebenen nebeneinander angeordnet und auf einer Seite oder auf gegenüberliegenden Seiten des hohlen Gebildes und in sich mit dessen Längsachse kreuzenden Ebenen an diesem vorbeigeführt sind. Eine derartige Verrohrung kommt dann zur Anwendung, wenn die Bauhöhe unterhalb des Tanks oder des Prozessaggregats begrenzt und dadurch die Anordnung eines Ventilverteilerbaumes mit einem von unten nach oben aufsteigenden, im Regelfall mit einem senkrechten Verlauf, nicht möglich ist und wenn gleichzeitig die gesamte relevante Verrohrung unterhalb des Auslaufs des Tanks oder des Prozessaggregats anzuordnen ist.

Das vermischungssichere Doppelsitzventil ist gemäß einem weiteren Vorschlag derart antriebsmäßig ausgestaltet, dass es durch einen Teilhub seiner Schließglieder einer Sitzreinigung unterworfen wird.

Weiterhin wird vorgeschlagen, um die jeweilige Sitzreinigungsströmung auf einen wünschenswerten Mindestvolumenstrom zu begrenzen, dass die Sitzreinigung des ersten Schließgliedes durch den der Öffnungsbewegung gegensinnigen ersten Teilhub und jene des zweiten Schließgliedes durch den gleichsinnigen zweiten Teilhub erfolgen, und dass in der jeweiligen Sitzreinigungsstellung am ersten Schließglied ein leckageraumseitiger erster Drosselspalt und am zweiten Schließglied ein leckageraumabgewandter zweiter Drosselspalt vorgesehen sind.

Damit ist es möglich, das wenigstens eine an dem hohlen Gebilde angeordnete vermischungssichere Doppelsitzventil nicht nur einer Reinigung seines Leckagehohlraums sowohl in der Schließ- als auch in der Offenstellung zu unterziehen, sondern auch einer Sitzreinigung der einen Abdichtungsstelle, wenn die jeweils andere Abdichtungsstelle in der Schließstellung verbleibt. Somit erlaubt die vorgeschlagene Vorrichtung sämtliche heute üblichen Ventilreinigungen im Sitzbereich des Ventils, wie sie auch bei herkömmlichen Ventilblöcken mit den vorgenannten Doppelsitzventilen möglich sind.

Das hohle Gebilde erlaubt einen sehr einfachen Anschluss des vermischungssicheren Doppelsitzventils, wenn es im Umfassungsbereich seiner Anschlussöffnung als Ringgehäuse ausgebildet ist, das die beiden Sitzflächen aufnimmt und dem Anschluss des Ventilgehäuses dient.

Wird, wie dies ein weiterer Vorschlag vorsieht, das als Hohlstange, vorzugsweise in Form einer sich weitestgehend zylinderförmig erstreckenden Schließhülse, ausgebildete zweite Schließglied an seiner äußeren Mantelfläche zylindrisch ausgebildet, dann lässt sich der Leckagehohlraum auf der Innenseite des hohlstangenförmigen zweiten Schließgliedes auf seiner gesamten axialen Erstreckung mit einem maximal möglichen Durchtrittsquerschnitt ausstatten.

Es wird weiterhin vorgeschlagen, dass das zweite Schließglied in ein Leckage-und Ablaufgehäuse ausmündet, das sich an der dem Ringgehäuse abgewandten Seite des Ventilgehäuses an letzteres anschließt und dort geführt und abgedichtet ist. Dadurch kann der Leckagehohlraum auf seiner gesamten axialen Erstreckungslänge mit einem Durchtrittsquerschnitt versehen werden, der dem größten Nenndurchtrittsquerschnitt der an das Ventilgehäuse angeschlossenen Rohrleitung entspricht (Erfüllung der sog. 3A-Forderung in USA), und die Leckage kann im Leckage- und Ablaufgehäuse gesammelt und von dort sicher abgeführt werden. Darüber hinaus verbessert sich die radiale Führung des zweiten Schließgliedes bei seiner Öffnungs- und Schließbewegung, da es im Leckage- und Ablaufgehäuse zusätzlich geführt ist.

Die vorstehende Lösung erlaubt einen Übergang des zweiten Schließgliedes im Bereich des Innenraumes des Leckage- und Ablaufgehäuses auf die im Durchmesser kleinere zweite Ventilstange, und es ist eine nahezu ungeschmälerte fluiddurchlässige Verbindung zwischen dem Innenraum des hohlstangenförmigen zweiten Schließgliedes und dem Innenraum der hohlzylindrischen zweiten Ventilstange über wenigstens eine im Wesentlichen radial orientierte Traverse vorgesehen.

Durch den Übergang des zweiten Schließgliedes auf die im Durchmesser wesentlich kleinere zweite Ventilstange im Bereich des Leckage- und Ablaufgehäuses lassen sich die konzentrisch ineinander angeordneten Ventilstangen an der dem Ventilgehäuse abgewandten Seite des Leckage- und Ablaufgehäuses durch letzteres hindurch- und aus diesem auf kleinem Durchmesser herausführen. Damit ist eine besonders sichere Abdichtung der zweiten Ventilstange gegenüber dem Leckage- und Ablaufgehäuse und damit der Umgebung gegeben.

Es ist weiterhin vorgesehen, dass der Leckagehohlraum über eine durch eine innere Mantelfläche des zweiten Schließgliedes begrenzte Ablaufbohrung mit dem Innenraum des Leckage- und Ablaufgehäuses verbunden ist, der in einen Ablaufanschluss ausmündet. Dadurch nimmt der Leckagehohlraum die größtmögliche radiale Ausdehnung ein und er erstreckt sich in axialer Richtung ungeschmälert bis in das Leckage- und Ablaufgehäuse, das als geschlossener Raum die Leckagen vollständig aufnimmt und über den Ablaufanschluss insgesamt ableitet.

Um das vorzugsweise bauchig ausgebildete Ventilgehäuse vollständig entleeren zu können wird weiterhin vorgeschlagen, dass ein Rohranschluss am Ventilgehäuse, bezogen auf die Anordnungslage des Ventilgehäuses, mit seiner untersten inneren Mantellinie am tiefsten Punkt des Innenraumes des Ventilgehäuses tangential einmündet.

Eine selbsttätige Entleerung des Leckagehohlraums ist sichergestellt oder besonders befördert, wenn, wie dies vorgesehen ist, bezogen auf die Anordnungslage, die Längsachse des Ventilgehäuses waagerecht oder, von der Anschlussöffnung aus gesehen, bis zu einem Winkel gegen die Waagerechte abfallend verläuft und wenn dabei eine innere Umfangswand des Leckagehohlraumes schwerkraftseitig zu dessen Austrittsöffnung hin ein Gefälle aufweist.

Um den Leckagehohlraum, unabhängig von der Reinigungsmöglichkeit im Zuge der Sitzreinigung, auch in der Schließ- und in der Offenstellung des Doppelsitzventils reinigen zu können, sieht ein weiteren Vorschlag vor, dass in einem sich an das Leckage- und Ablaufgehäuse anschließenden Laternengehäuse ein Reinigungsmittelanschluss angeordnet ist, der mit einem zwischen den Ventilstangen gebildeten Ringspalt in Verbindung steht, wobei letzterer an seinem dem Reinigungsmittelanschluss abgewandten Ende über eine Reinigungsdüse in den Leckagehohlraum einmündet. Über diesen Reinigungsmittelanschluss kann Reinigungsmittel aus der Umgebung des Doppelsitzventils in den Leckagehohlraum eingeleitet werden.

Damit das erste Schließglied im Zuge der Öffnungsbewegung nach dem Hineinfahren in die zylindrische Aufnahmebohrung innerhalb des zweiten Schließgliedes in letzterem zur Anlage gelangen und dieses auf dem weiteren Öffnungsweg mitnehmen kann, ohne dass der Leckageabfluss durch einen radialen Vorsprung innerhalb der Ablaufbohrung oder der sich anschließenden inneren Mantelfläche behindert wird, wird vorgeschlagen, dass an der Ventilstange radial außenseits ein ringförmiger erster Anschlag vorgesehen ist, der im Zuge der Offnungsbewegung des Ventils mit einem an der Innenseite der zweiten Ventilstange korrespondierenden ringförmigen zweiten Anschlag, und hier zum Zeitpunkt der Mitnahme des zweiten Schließgliedes durch das erste Schließglied, zusammenwirkt.

Um Produktverluste, beispielsweise beim Wechsel von der Produktfahrt zur Durchflussreinigung (CIP-Reinigung) der Rohrleitungen, zu minimieren, ist die in Frage kommende Rohrleitung molchbar ausgeführt. Hierzu wird vorgeschlagen, dass die betreffende Rohrleitung durchgängig mit einem unversperrten, Kreisform aufweisenden Durchtrittsquerschnitt ausgeführt und an einem jeweiligen Ventilgehäuse des Doppelsitzventils vorbeigeführt und mit letzterem jeweils fluidgängig verbunden ist.

Die Ausführung des hohlen Gebildes gestaltet sich besonders einfach, wenn es, wie dies weiterhin vorgesehen ist, als zylindrisches Rohr ausgebildet ist.

Das hohle Gebilde lässt sich restlos entleeren und einwandfrei reinigen, wenn sein dem jeweiligen Tank oder der jeweiligen vom Prozessaggregat oder Tank herangeführten Rohrverbindung abgewandtes unterstes Ende mit einem dritten Rohrsystem verbunden ist.

Die Vorrichtung wird besonders übersichtlich und einfach, wenn die Rohrleitungen, gemäß einem weiteren Vorschlag, jeweils als durchgehende, allen Rohrverbindungen in gleicher Funktion zugeordnete Rohrleitungen (Füllen; Entleeren; Rohrreinigung) ausgeführt sind.

Einfache und übersichtliche Rohrleitungsführungen ergeben sich im Rahmen es Verrohrungssystems, wenn die Ventilverteilerbäume eine reihen- oder matrixförmige Anordnung aufweisen.

Alternativ zur Ausgestaltung des hohlen Gebildes in Form eines zylindrischen Rohres ist weiterhin vorgesehen, dass das hohle Gebilde jeweils aus einer Aggregation von einzelnen Gebildeabschnitten zusammengesetzt ist, die in Richtung der Längsachse des hohlen Gebildes fluiddurchgängig miteinander verbunden sind und jeweils mindestens eine Anschlussöffnung aufweisen. Bei diesen Gehäuseteilen kann es sich entweder um diskrete, separate Teile handeln, die zu dem hohlen Gebilde in seiner Gesamtheit gefügt werden, oder um ein einstückiges Ganzes, bei dem die einzelnen Gehäuseteile stoffschlüssig miteinander verbunden sind.

Bei beiden vorg. Ausführungsvarianten sind, gemäß einem weiteren Vorschlag, die Gebildeabschnitte in Form von Gehäuseteile unterschiedlich groß ausgebildet, so dass an diesen Gehäuseteilen im Bedarfsfall, wie dies gleichfalls vorgesehen ist, wenigstens eine Anschlussöffnung ausgeführt werden kann, die einen von der Größe des jeweils zugeordneten Gehäuseteils abhängigen Durchtrittsquerschnitt aufweist. Anschlussöffnungen mit unterschiedlich großen Durchtrittsquerschnitten an einem Gehäuseteil sind gleichfalls vorgesehen. Durch diese Gestaltungsvielfalt lässt sich das hohle Gebilde in allen seinen durchströmten Bereichen an die strömungstechnischen Erfordernisse der angeschlossenen Rohrleitungen unterschiedlicher Nennweite anpassen.

### KURZBESCHREIBUNGEN DER ZEICHNUNGEN

Ausführungsbeispiele der Vorrichtung zur Verrohrung von Prozessanlagen im Rahmen der ersten und der zweiten Anordnungsvariante sowie in der ersten und der zweiten Richtungsvariante gemäß der Erfindung sind in den Figuren der Zeichnung dargestellt und werden nachfolgend hinsichtlich Aufbau und Funktion beschrieben. Es zeigen
- **Figur 1**: in Form einer teilweise schematisch dargestellten Perspektive eine erfindungsgemäße Vorrichtung mit drei Ventilverteilerbäumen in reihenförmig fluchtender Anordnung, wobei an den hohlen Gebilden der beiden vorderen Ventilverteilerbäume jeweils beidseitig, einander gegenüberliegend, in zueinander und zur Längsachse des hohlen Gebildes parallelen Ebenen Rohrsysteme vorbeigeführt und angeschlossen sind und das dritte hohle Gebilde vor einer Wand angeordnet und einseitig an das zugeordnete Rohrsystem angeschlossen ist;
- **Figur 2**: einen Mittelschnitt durch den vorderen Ventilverteilerbaum gemäß **Figur 1** entsprechend einem dort mit **A-A** gekennzeichneten Schnittverlauf, wobei entsprechende Mittelschnitte der beiden anderen Ventilverteilerbäume im vorliegenden Ausführungsbeispiel bei gleichliegenden Bauteilen zu gleichen Darstellungen führen;
- **Figur 2a**: in vergrößerter Darstellung einen Mittelschnitt durch einen der drei das hohle Gebilde gemäß **Figur 2** bildenden Gebildeabschnitte mit einem im Umfassungsbereich seiner Anschlussöffnungen jeweils vorgesehenen Ringgehäuse;

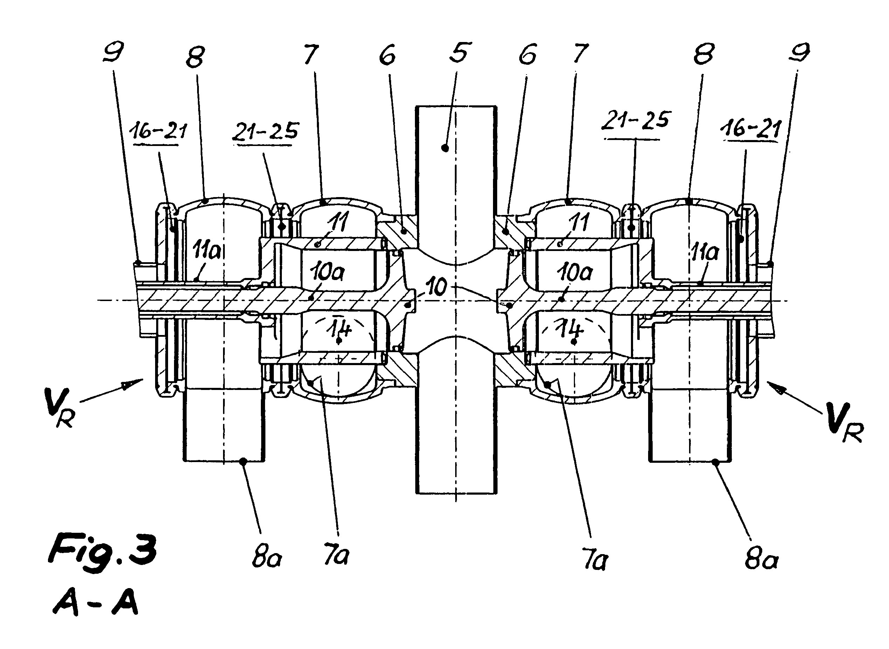

- **Figur 3**: in weiter vergrößerter Darstellung der Mittelschnitt durch einen der Gebildeabschnitte gemäß **Figur 2** mit den beidseitig angeschlossenen vermischungssicheren Doppelsitzventilen, wobei diese jeweils in ihrem Schließglied- und Ventilgehäusebereich dargestellt sind;

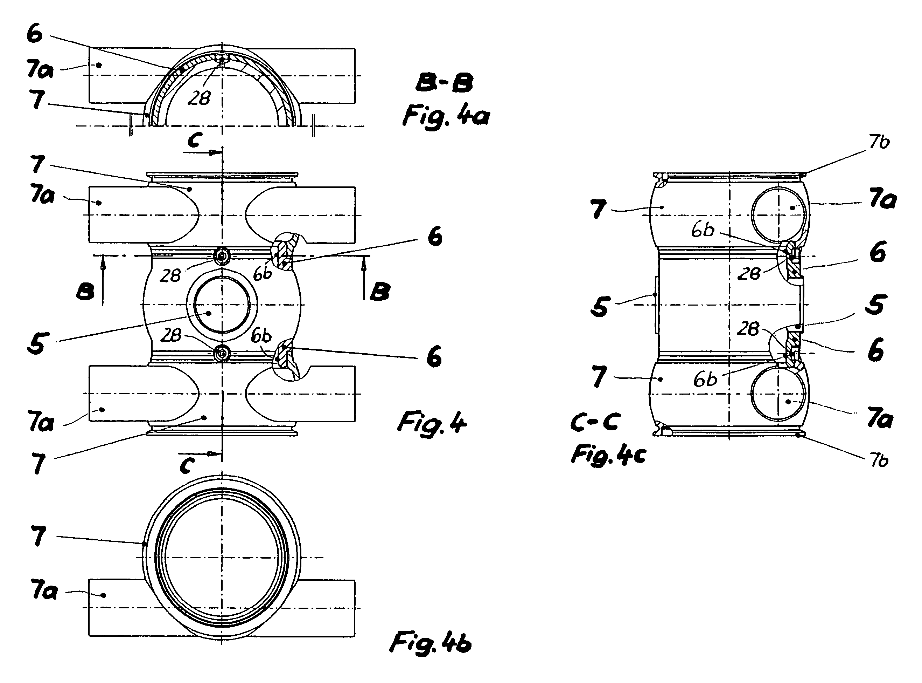

- **Figur 4**: in Ansicht eine vorteilhafte erste Ausführungsform des Gebildeabschnitts in stoffschlüssiger Verbindung mit einem auf jeder Seite angeordneten, im Nenndurchmesser jeweils gleichen Ventilgehäuse, das jeweils beidseitig tangential angeordnete Rohranschlüsse besitzt, wobei die Betrachtungsrichtung, bezogen auf die Anordnungslage, von unten erfolgt und die Verbindungsstellen zwischen dem Gebildeabschnitt und dem jeweiligen Ventilgehäuse jeweils in einem meridian verlaufenden Teilschnitt dargestellt sind; **Figur 4a** einen Schnitt durch den Gebildeabschnitt gemäß **Figur 4** entsprechend einem dort mit **B-B** gekennzeichneten Schnittverlauf;
- **Figur 4b**: die Draufsicht auf den Gebildeabschnitt gemäß **Figur 4****;**
- **Figur 4c**: die Seitenansicht auf den Gebildeabschnitt gemäß **Figur 4****,** wobei die Darstellung Teilschnitte durch die beiderseitigen Klemmflansche und Einzelheiten im Bereich der Verbindungsstellen zwischen dem Gebildeabschnitt und den Ventilgehäusen entsprechend einem in **Figur 4** mit **C-C** gekennzeichneten Schnittverlauf enthält;

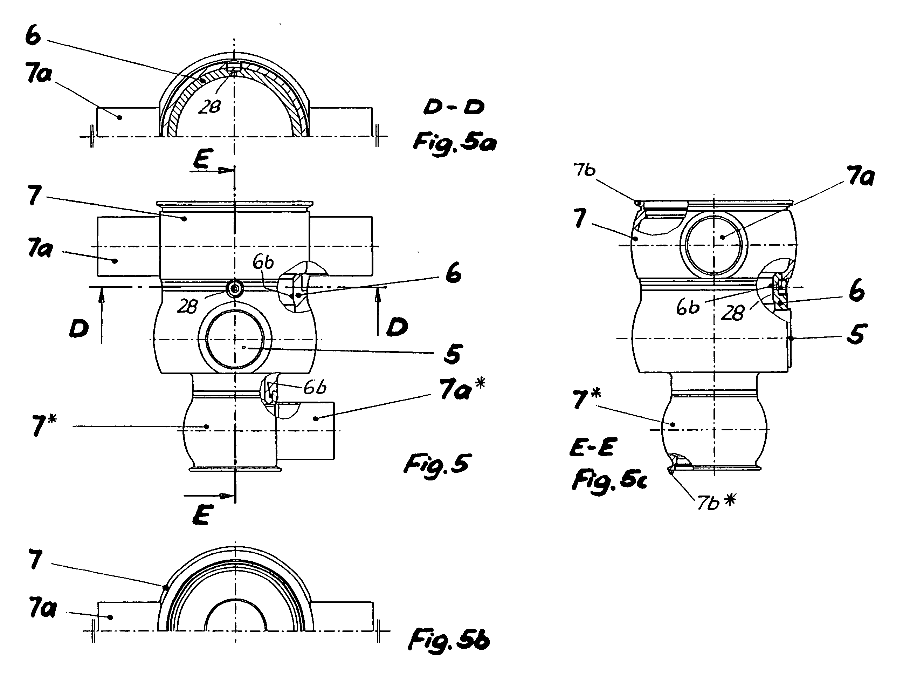

- **Figur 5**: in Ansicht eine vorteilhafte zweite Ausführungsform des Gebildeabschnitts in stoffschlüssiger Verbindung mit einem auf jeder Seite angeordneten, im Nenndurchmesser jeweils unterschiedlichen Ventilgehäuse, von denen das eine beidseitig, mittig angeordnete Rohranschlüsse und das andere einen einseitig, mittig angeordneten Rohranschluss besitzt, wobei die Betrachtungsrichtung, bezogen auf die Anordnungslage, von unten erfolgt und die Verbindungsstellen zwischen dem Gebildeabschnitt und dem jeweiligen Ventilgehäuse jeweils in einem meridian verlaufenden Teilschnitt dargestellt sind;
- **Figur 5a**: einen Schnitt durch den Gebildeabschnitt gemäß **Figur 5** entsprechend einem dort mit **D-D** gekennzeichneten Schnittverlauf;
- **Figur 5b**: die Draufsicht auf den Gebildeabschnitt gemäß **Figur 5****;**
- **Figur 5c**: die Seitenansicht auf den Gebildeabschnitt gemäß **Figur 5****,** wobei die Darstellung Teilschnitte durch die beiderseitigen Klemmflansche und Einzelheiten im Bereich der Verbindungsstellen zwischen Gebildeabschnitt und Ventilgehäusen entsprechend einem in **Figur 5** mit **E-E** gekennzeichneten Schnittverlauf enthält;

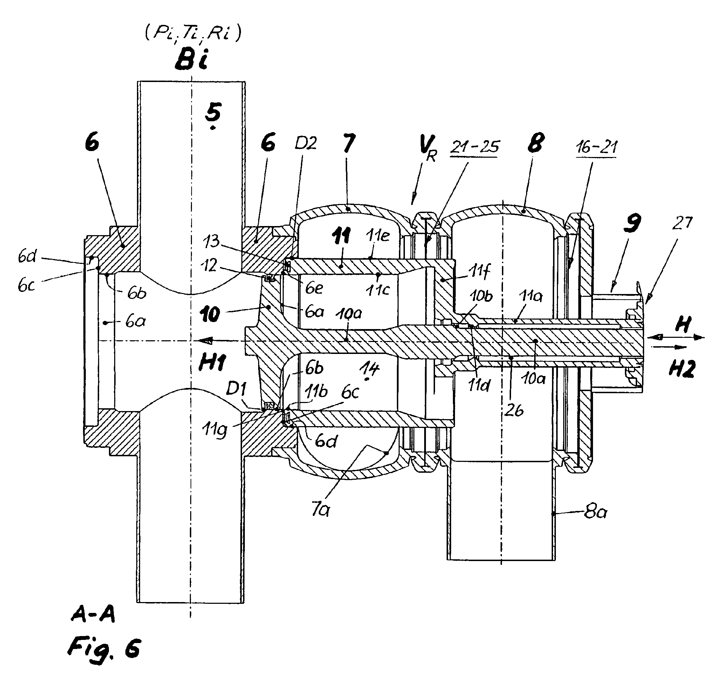

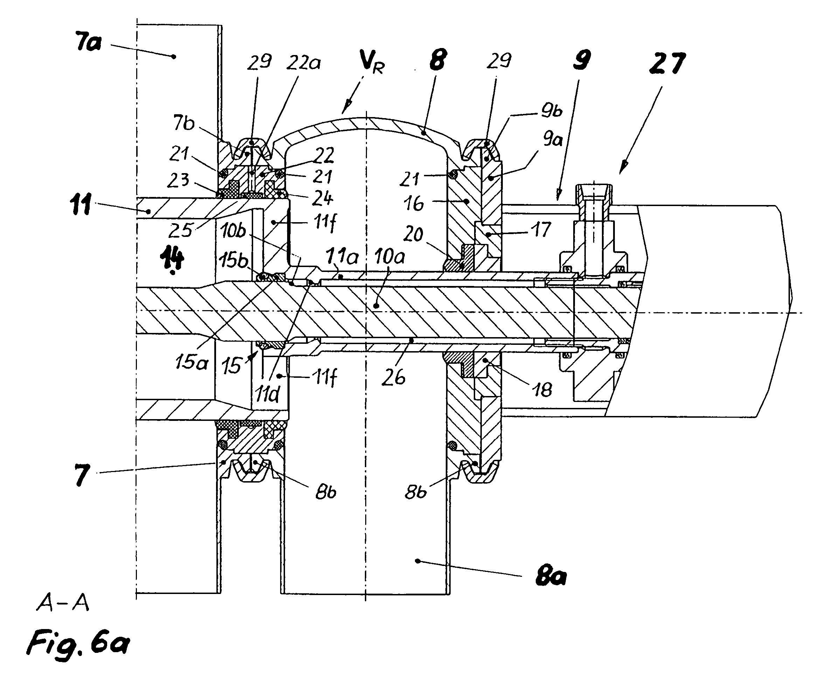

- **Figur 6**: einen detailgetreueren Mittelschnitt durch einen Gebildeabschnitt in Verbindung mit einem rechtsseitig angeordneten, vermischungssiche- ren Doppelsitzventil entsprechend dem in **Figur 1** mit **A-A** gekennzeichneten Schnittverlauf und
- **Figur 6a**: im Mittelschnitt Einzelheiten des Doppelsitzventils gemäß **Figur 6** hinsichtlich der Führung und Abdichtung zum Einen des zweiten Schließgliedes im Bereich zwischen dem Ventilgehäuse und dem Leckage-und Ablaufgehäuse und zum Anderen der zweiten Ventilstange im Bereich zwischen dem Leckage- und Ablaufgehäuse und dem Laternengehäuse;

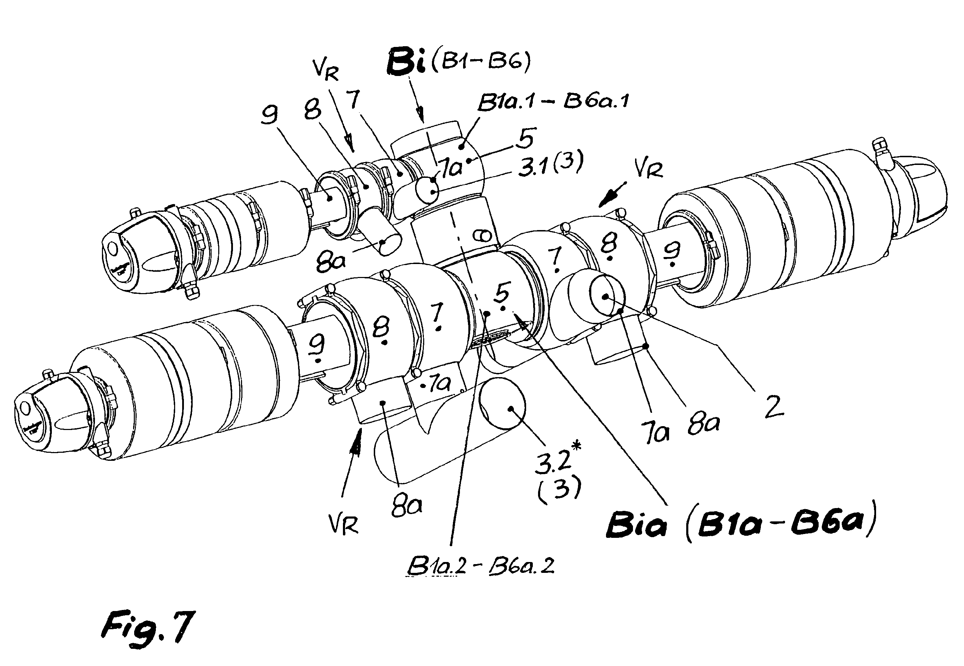

- **Figur 7**: in perspektivischer Darstellung einen Ventilverteilerbaum mit den beidseitig angeschlossenen vermischungssicheren Doppelsitzventilen und darüber mit einem einseitig angeschlossenen vermischungssicheren Doppelsitzventil, wobei die Gebildeabschnitte in Form von Gehäuseteilen unterschiedlich groß ausgebildet sind;

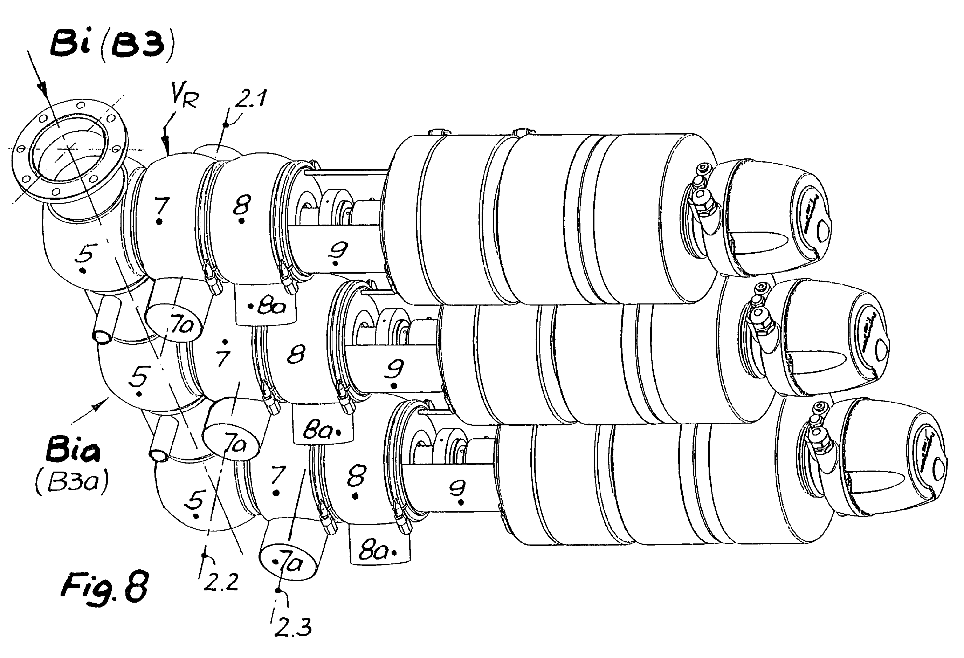

- **Figur 8**: in perspektivischer Darstellung die erfindungsgemäße Vorrichtung in der aus **Figur 1** ersichtlichen zweiten Anordnungsvariante mit einseitig am senkrecht angeordneten Ventilverteilerbaum (erste Richtungsvariante) angeschlossenen vermischungssicheren Doppelsitzventilen und

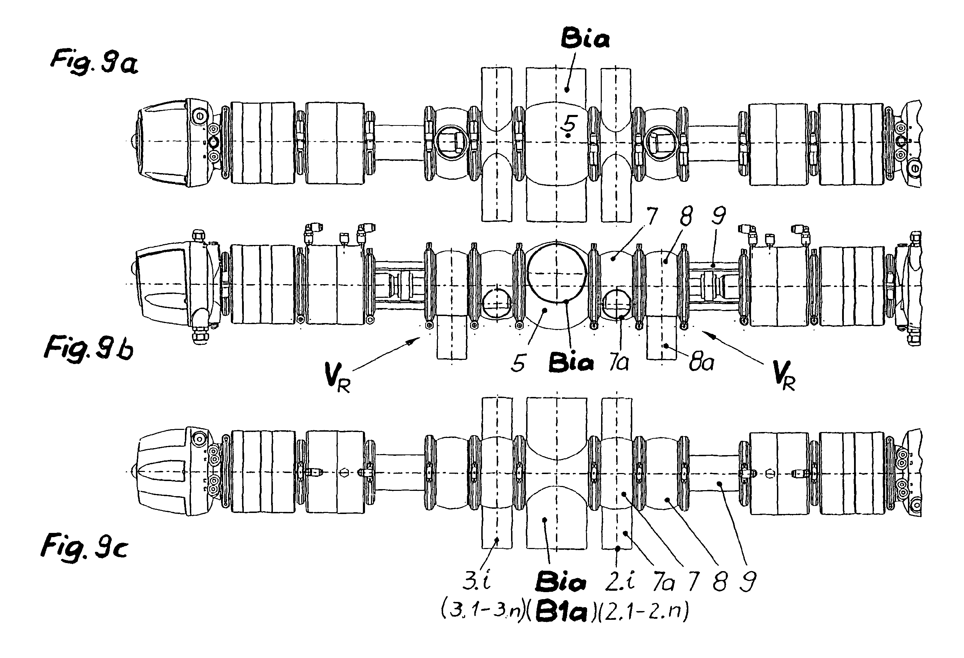

- **Figuren 9a bis 9c**: in Unteransicht, Ansicht und Draufsicht eine spezielle Ausführungsform eines Gebildeabschnitts des hohlen Gebildes mit beiderseits daran angeordneten leckagegesicherten Doppelsitzventilen, wobei es sich um einen Ventilverteilerbaum in waagerechter Anordnung (zweite Richtungsvariante der ersten oder zweiten Anordnungsvariante) handelt.

Während die Erfindung in den verschiedensten Ausbildungsformen realisierbar ist, werden in den Zeichnungen im Rahmen der vorgeschlagenen grundsätzlichen Lösung besonders bevorzugte Anordnungs- und Richtungsvarianten gezeigt und nachfolgend beschrieben unter der Voraussetzung, dass diese nur Beispiele für die Erfindung darstellen, nicht aber die Erfindung auf die speziell dargestellten Beispiele beschränkt ist.

### DETAILLIERTE BESCHREIBUNG

Eine Vorrichtung 1 zur Verrohrung von Prozessanlagen bestehe beispielhaft aus drei Ventilverteilerbäumen B1, B2 und B3, im allgemeinsten Falle aus B1 bis Bn Ventilverteilerbäumen, die vorzugsweise reihenförmig und miteinander fluchtend nebeneinander angeordnet sind. Jeder Ventilverteilerbaum B1, B2, B3 (Bi) ist als langgestrecktes hohles Gebilde B1a, B2a, B3a (im allgemeinsten Falle B1a bis Bna; Bia), vorzugsweise in Form eines zylindrischen Rohres oder aus einer Aggregation von einzelnen Gebildeabschnitten 5 (s. **Figur 2**), ausgeführt, der einen von unten nach oben aufsteigenden, im Regelfall einen senkrechten Verlauf aufweist (erste Richtungsvariante). Die dargestellte Vorrichtung 1 zeigt weiterhin ein erstes Rohrsystem 2, das aus einer ersten Gruppe Rohrleitungen 2.1, 2.2, 2.3 (im allgemeinsten Falle aus 2.1 bis 2.i bis 2.n Rohrleitungen) besteht, und ein zweites Rohrsystem 3, das aus einer zweiten Gruppe Rohrleitungen 3.1, 3.2, 3.3 (im allgemeinsten Falle aus 3.1 bis 3.i bis 3.n Rohrleitungen) besteht. Jeweils am unteren Ende des jeweiligen Ventilverteilerbaumes B1 bis B3 kann ein im vorliegenden Falle nicht dargestelltes drittes Rohrsystem 4 (beispielsweise für Reinigung) angeschlossen sein, wenn dieser Ort oder Zugang nicht für andere Vorkehrungen zur Verfügung stehen soll.

Die erste Gruppe Rohrleitungen 2.1, 2.2, 2.3 und die zweite Gruppe Rohrleitungen 3.1, 3.2, 3.3 sind jeweils in reihenförmiger Anordnung untereinander und, in Bezug auf die vorderen beiden Ventilverteilerbäume B1 und B2, auf einander gegenüberliegenden Seiten des hohlen Gebildes B1a, B2a, in zwei zueinander und zur Längsachse des hohlen Gebildes parallelen Ebenen angeordnet und an diesem vorbeigeführt (beidseitige Anordnung der vermischungssicheren Doppelsitzventile V_{R}). Das dritte hohle Gebilde B3a befindet sich beispielsweise unmittelbar vor einer vertikalen Wand, so dass an diesem nur das erste Rohrsystem 2 vorbeigeführt werden und Anschluss finden soll (einseitige Anordnung der vermischungssicheren Doppelsitzventile V_{R}).

Eine perspektivische Darstellung der dem hinteren Ventilverteilerbaum B3 im Wesentlichen entsprechende Anordnung zeigt **Figur 8****.** Das hohle Gebilde B1a. B2a, B3a besitzt Anschlussöffnungen 6a **(****Figuren 2** und **2a****)** zum Verbinden seines Innenraumes mit jeder der Rohrleitungen 2.1, 2.2, ..., 2.i, ..., 2.n und 3.1, 3.2, ..., 3.1, ..., 3.n und ggf. 4. In jeder dieser Verbindungen ist das vermischungssicher ausgestaltete Doppelsitzventil V_{R} angeordnet, das diese Verbindung in unmittelbarer Nähe zum hohlen Gebilde B1a, B2a, B3a schaltet.

Bei der in **Figur 1** dargestellten Vorrichtung 1 finden die vorstehend erwähnten Doppelsitzventile V_{R} Verwendung; gleichfalls geeignete sog. Doppeldichtventile unterscheiden sich von letzteren, von außen gesehen, im Wesentlichen nicht. Bei der gleichfalls möglichen Verwendung von leckagegesicherten Scheibenventilen ergibt sich hinsichtlich des Antriebs und eines Leckage- und Ablaufgehäuses für die Schaltleckage und das Reinigungsmittel aus der Reinigung eines Leckagehohlraumes ein anderes Erscheinungsbild, da der jeweilige Antrieb senkrecht zur Symmetrieachse der zugeordneten Anschlussöffnung 6a angeordnet ist und die Schaltleckage und das Reinigungsmittel in der Regel unmittelbar aus dem Leckage- und Ablaufgehäuse in die Umgebung abgeführt werden. Führung und Verlauf der Rohrsysteme 2 und 3 und ggf. 4 sind im Wesentlichen unabhängig von der Art der verwendeten vermischungssicheren Ventile.

Wie dies in **Figur 1** angedeutet ist, mündet der jeweilige Ventilverteilerbaum B1 bis B3 (im allgemeinsten Falle B1 bis Bi bis Bn) entweder unmittelbar im unteren Tankboden T1a bis T3a (im allgemeinsten Falle T1a bis Tia bis Tna) eines jeweils zugeordneten Tanks T1 bis T3 (Tank T; im allgemeinsten Falle T1 bis Ti bis Tn) der Prozessanlage aus (erste Anordnungsvariante) oder er ist über eine zugeordnete Rohrverbindung R (R1 bis R3; im allgemeinsten Falle R1 bis Ri bis Rn) mit einem zugeordneten Prozessaggregat P (P1, P2; im allgemeinsten Falle P1 bis Pi bis Pn) oder Tank T1 (Tank T; im allgemeinsten Falle T1 bis Ti bis Tn) der Prozessanlage verbunden und die Rohrverbindung R (R1 bis R3 (im allgemeinsten Falle R1 bis Ri bis Rn) mündet in das obere Ende des Ventilverteilerbaumes B1 bis B3 (B1 bis Bi bis Bn) ein (zweite Anordnungsvariante). Die beiden vorgenannten grundsätzlichen Anordnungsvarianten können auch in einer einzigen Vorrichtung 1 auftreten (Mischform).

Bei der zweiten Anordnungsvariante ist das obere Ende des ersten Ventilverteilerbaumes B1 über eine erste Rohrverbindung R1 beispielhaft mit einem ersten Prozessaggregat P1 verbunden, der zweite Ventilverteilerbaum B2 ist über eine zweite Rohrverbindung R2 mit einem ersten Tank T1 und der dritte Ventilverteilerbaum B3 ist über eine dritte Rohrverbindung R3 mit einem zweiten Prozessaggregat P2 verbunden. Die Rohrverbindungen R1, R2 und R3 sind im allgemeinsten Falle Rohrverbindungen R zugeordnet, die aus einer Anzahl i = 1 bis n Rohrverbindungen R1 bis Rn bestehen können.

Die Prozessaggregate P oder die Tanks T können bei der zweiten Anordnungsvariante jede Anordnung und Positionierung einnehmen, während die Ventilverteilerbäume B1 bis Bn vorzugsweise reihen- oder matrixförmig angeordnet sind. Bei den dargestellten Rohrverbindung R1 bis R3 (R1 bis Rn) kann es sich im Bereich ihres an den Ventilverteilerbaum B1 bis B3 (B1 bis Bn) angeschlossenen Endabschnitts jeweils um einen senkrechten oder einen wie auch immer geneigten Endabschnitt handeln. Der geneigte Endabschnitt, der im Grenzfall waagerecht verläuft, findet mit einem entsprechenden Rohrbogen Anschluss an dem tank- oder prozessaggregatseitigen Ende des jeweiligen Ventilverteilerbaumes B1 bis B3 (B1 bis Bn).

Die Ventilverteilerbäume Bi können, wie später noch im Einzelnen dargelegt wird, auch waagerecht angeordnet sein (zweite Richtungsvariante). Für die Verbindung des jeweiligen waagerecht angeordneten Ventilverteilerbaumes Bi mit dem zugeordneten Tank Ti oder Prozessaggregat Pi gelten die vorstehenden Ausführungen sinngemäß.

**Figur 2** zeigt, dass das hohle Gebilde B1a, B2a (im allgemeinsten Falle Bia) beispielhaft aus drei gleichen Gebildeabschnitten 5 zusammengesetzt sein kann, wobei jeder Gebildeabschnitt 5 **(****Figur 2a****)** im Umfassungsbereich seiner Anschlussöffnungen 6a als Ringgehäuse 6 ausgebildet ist, das jeweils innenseits eine erste Sitzfläche 6b, eine zweite Sitzfläche 6c sowie eine zylindrische Ausnehmung 6d aufnimmt. An das Ringgehäuse 6 schließt sich, jeweils quer zur Längsrichtung (Längsachse L) des Gebildeabschnitts 5, beiderseits ein erstes Ventilgehäuse 7 an (s. auch **Figur 3**), an dessen Rohranschluss 7a die Rohrleitungen 2.1, 2.2, ..., 2.i, ..., 2.n und 3.1, 3.2, ..., 3.1, ..., 3.n herangeführt sind (s. auch **Figuren 1****,** **7****,** **8****,** **9c**). Im Ausführungsbeispiel **(****Figur 3****)** ist vorgesehen, dass der Rohranschluss 7a am Ventilgehäuse 7, bezogen auf die Anordnungslage, mit seiner untersten inneren Mantellinie am tiefsten Punkt des Innenraumes des Ventilgehäuses 7 tangential einmündet (s. hierzu auch **Figuren 4** bis **4c****,** **7****,** **9a** bis **9c**).

Das Ventilgehäuse 7 ist Teil des vermischungssicheren Doppelsitzventils V_{R}. An das Ventilgehäuse 7 schließt sich, in Längsrichtung des Doppelsitzventils V_{R} gesehen, seitlich ein Leckage- und Ablaufgehäuse 8 **(****Figuren 3****,** **2****)** mit einem Ablaufanschluss 8a sowie ein nicht näher bezeichneter Antrieb an, wobei letzterer mit dem Leckage- und Ablaufgehäuse 8 über ein Laternengehäuse 9 verbunden ist.

Das Doppelsitzventil V_{R} ist mit zwei seriell angeordneten Schließglieder 10, 11 ausgebildet, die in der Schließstellung des Ventils das Überströmen von Fluiden vom hohlen Gebilde Bia bzw. von dem Gebildeabschnitt 5 in das Ventilgehäuse 7 verhindern. Die Schließglieder 10, 11 begrenzen sowohl in der Schließ- als auch in der Offenstellung einen Leckagehohlraum 14, der mindestens einen Verbindungsweg mit der Umgebung des Doppelsitzventils V_{R} aufweist. Im dargestellten Ausführungsbeispiel sind der Innenraum des Leckage- und Ablaufgehäuses 8 und sein Ablaufanschluss 8a Teil dieses Verbindungsweges. Ein weiterer Verbindungsweg wird im Ausführungsbeispiel der **Figuren 6** und **6a** beschrieben. Das erste Schließglied 10 ist mit einer ersten Ventilstange 10a und das zweite Schließglied 11 ist mit einer zweiten Ventilstange 11 a verbunden, die konzentrisch ineinander angeordnet sind und einseitig durch das erste Ventilgehäuse 7 hindurch- und aus diesem über das Leckage- und Ablaufgehäuse 8 zu dem Antrieb herausgeführt sind. Die Führung und Abdichtung des zweiten Schließgliedes 11 in einem Bereich 21 - 25 zwischen den Gehäusen 7, 8 sowie der zweiten Ventilstange 11a in einem Bereich 16 - 21 zwischen den Gehäusen 8, 9 ist in der Erläuterung zu den **Figuren 6** und **6a** beschrieben.

Eine vorteilhafte Ausführungsform des Gebildeabschnitts 5, seiner beiden Ringgehäuse 6 und des sich jeweils daran anschließenden Ventilgehäuses 7 zeigen die **Figuren 4** bis **4c****.** Dabei sind der Gebildeabschnitt 5 und die beiden Ringgehäuse 6 einstückig ausgeführt und das erste Ventilgehäuse 7 umfasst jeweils das Ringgehäuse 6 radial außenseits und ist mit diesem stoffschlüssig, vorzugsweise durch Schweißung, verbunden. Die in **Figur 2a** bezeichnete Anschlussöffnung 6a bildet mit ihrer Umfangsbegrenzung die zylindrische erste Sitzfläche 6b für das erste Schließglied 10 aus. Für eine Spülung und/oder Drainage des Leckagehohlraumes 14 kann, wie dargestellt, ein Spülanschluss 28 vorgesehen werden. Die Rohranschlüsse 7a sind, wie vorstehend bereits beschrieben, tangential an das erste Ventilgehäuse 7 angeschlossen. Das erste Ventilgehäuse 7 besitzt an seinem dem Leckage- und Ablaufgehäuse 8 zugewandten Ende jeweils einen ersten Klemmflansch 7b, über den es mit dem Leckage- und Ablaufgehäuse 8 über einen sog. Spannring 29 **(****Figur 6a****)** lösbar verbunden ist.

Die **Figuren 5** bis **5c** zeigen eine gegenüber den Figuren **4** bis **4c** modifizierte Gehäusekonfiguration. Der Unterschied besteht insbesondere darin, dass die beiden ersten Ventilgehäuse 7 nunmehr nicht mehr gleichgroß ausgeführt sind, sondern dass ein zweites Ventilgehäuse 7* kleiner als das erste Ventilgehäuse 7 bemessen ist und dass die dem ersten Ventilgehäuse 7 zugeordneten Rohranschlüsse 7a und ein dem zweiten Ventilgehäuse 7* zugeordneter modifizierter Rohranschluss 7a* jeweils mittig aus dem jeweiligen Ventilgehäuse 7, 7* ausmünden. Der modifizierte Rohranschluss 7a* ist mit einem zweiten Klemmflansch 7b* versehen, mit dem es mit einem nicht dargestellten Leckage- und Ablaufgehäuse 8 entsprechender Nennweite mittels eines weiteren Spannringes 29 verbunden ist.

Die **Figuren 6** und **6a** zeigen weitere Einzelheiten des vermischungssicheren Doppelsitzventils V_{R}. Vom Ventilverteilerbaum Bi ist nur ein Gebildeabschnitt 5 herausgegriffen **(****Figur 6****),** wobei der Ventilverteilerbaum Bi über eine Rohrverbindung Ri mit einem Prozessaggregat Pi oder einem Tank Ti verbunden ist. Ausgehend von den bereits vorstehend dargestellten Merkmalen des Doppelsitzventils V_{R} ist zu ergänzen, dass das erste Schließglied 10 unabhängig angetrieben ist und bei seiner Öffnungsbewegung am als Sitzteller ausgebildeten zweiten Schließglied 11 zur Anlage kommt und dieses gleichfalls in die Offenstellung überführt. Das zweite Schließglied 11 ist als Hohlstange ausgebildet, vorzugsweise als zylinderförmige Schließhülse bzw. rohrförmig und innen und außen wenigstens annähernd zylinderförmig, die an ihrer dem ersten Schließglied 10 zugewandten Stirnfläche eine axial wirkende zweite Sitzdichtung 13 aufweist, die mit der an die zylindrische erste Sitzfläche 6b angrenzen dem zweiten Sitzfläche 6c zusammenwirkt. Das als Schieberkolben ausgebildete erste Schließglied 10 weist eine radial wirkende erste Sitzdichtung 12 auf, die in der Schließstellung des Doppelsitzventils V_{R} in der ersten Sitzfläche 6b dichtend Aufnahme findet. Dabei ist die zylindrische erste Sitzfläche 6b in der die Anschlussöffnung 6a begrenzenden Umfangswand ausgebildet.

Das zweite Schließglied 11 weist an seinem die zweite Sitzdichtung 13 aufnehmenden Endabschnitt innenseits eine zylindrische Aufnahmebohrung 11 b auf, die durchmessergleich mit der zylindrischen ersten Sitzfläche 6b ausgebildet ist. In der Schließstellung des zweiten Schließgliedes 11 gehen die Aufnahmebohrung 11 b und die erste Sitzfläche 6b bündig ineinander über, so dass leckagefreies Schalten mit nur zwei Sitzdichtungen 12, 13 gegeben ist.

Das Doppelsitzventil V_{R} wird durch einen jeweiligen Teilhub H1, H2 seiner Schließglieder 10, 11 einer Sitzreinigung unterworfen. Die Sitzreinigung des ersten Schließgliedes 10 erfolgt durch den der Öffnungsbewegung mit einem Offnungshub H gegensinnigen ersten Teilhub H1 und jene des zweiten Schließgliedes 11 durch den gleichsinnigen zweiten Teilhub H2, wobei das jeweils andere Schließglied 11, 10 in seiner Schließstellung verbleibt. In der jeweiligen Sitzreinigungsstellung wird am ersten Schließglied 10 ein leckageraumseitiger erster Drosselspalt D1 und am zweiten Schließglied 11 ein leckageraumabgewandter zweiter Drosselspalt D2 gebildet. Der erste Drosselspalt D1 wird dabei einerseits von dem äußeren Durchmesser des ersten Schließgliedes 10 (Schieberkolben) und andererseits von der zylindrischen ersten Sitzfläche 6b und der zweite Drosselspalt D2 wird einerseits von einer äußeren Mantelfläche 11e des hohlstangenförmigen zweiten Schließgliedes 11 und andererseits von der zylindrischen Ausnehmung 6d im Ringgehäuse 6 begrenzt.

In der Schließstellung des zweiten Schließgliedes 11, die von diesem auch in der Sitzreinigungsstellung des ersten Schließgliedes 10 eingenommen wird, verfügt das zweite Schließglied 11 mit einer schließgliedseitigen Anschlagfläche 11g, die radial innenseits gegenüber der zweiten Sitzdichtung 13 angeordnet ist, über einen metallischen Anschlag an der zweiten Sitzfläche 6c, wobei eine zugeordnete sitzflächenseitige Anschlagfläche 6e unmittelbar an die erste Sitzfläche 6b angrenzt. Durch diese Anordnung wird der Sitzbereich des zweiten Schließgliedes 11 im Zuge der Sitzreinigung des ersten Schließgliedes 10 vor einer Direktbeaufschlagung mit der Sitzreinigungsströmung, zusätzlich zu der ohnehin optimalen Anordnungsgeometrie der Sitzflächen zueinander, sehr wirksam geschützt. Eine Direktbeaufschlagung des Sitzbereichs des ersten Schließgliedes 10 im Zuge der Sitzreinigung des zweiten Schließgliedes 11 ist ebenfalls ausgeschlossen, da die zugeordnete Sitzreinigungsströmung quer zur ersten Sitzfläche 6b und mit Abstand vom benachbarten Endabschnitt des ersten Schließgliedes 10 und seiner ersten Sitzdichtung 12 kollisionsfrei in den Leckagehohlraum 14 eintritt.

Das als Hohlstange ausgebildete zweite Schließglied 11 ist an seiner äußeren Mantelfläche 11e zylindrisch ausgebildet, und es mündet in das Leckage- und Ablaufgehäuse 8 aus (Figur 6a), das sich mit einem dritten Klemmflansch 8b an der dem Ringgehäuse 6 abgewandten Seite des Ventilgehäuses 7 an letzteres anschließt. Die lösbare Verbindung übernimmt der Spannring 29. Die äußere Mantelfläche 11e ist im Verbindungsbereich zwischen dem Ventilgehäuse 7 und dem Leckage- und Ablaufgehäuse 8 geführt und abgedichtet. Diese Führung und Abdichtung übernimmt ein Drainagering 22, der radial außenseits über zwei axial beabstandete Gehäusedichtungen 21 einerseits im Ventilgehäuse 7 und andererseits im Leckage- und Ablaufgehäuse 8 gedichtet ist. Zwischen diesen Gehäusedichtungen 21 mündet eine Drainagebohrung 22a aus, die sich in radialer Richtung durch den Drainagering 22 erstreckt. Die innenseitige Abdichtung des Drainagerings 22 gegenüber dem diesen durchdringenden hohlstangenförmigen zweiten Schließglied 11 übernehmen zwei axial beabstandete Stangendichtungen 23 und 24, zwischen denen ein Führungsring 25 angeordnet ist.

Das zweite Schließglied 11 geht im Bereich des Innenraumes des Leckage- und Ablaufgehäuses 8 auf die im Durchmesser kleinere zweite Ventilstange 11 a über, und es ist eine fluiddurchlässige Verbindung zwischen dem Innenraum des zweiten Schließglieds 11 und dem Innenraum der hohlstangenförmigen zweiten Ventilstange 11a über wenigstens eine im Wesentlichen radial orientierte Traverse 11f vorgesehen. Die Ventilstangen 10a, 11a sind an der dem Ventilgehäuse 7 abgewandten Seite des Leckage- und Ablaufgehäuses 8 durch letzteres hindurch- und aus diesem herausgeführt, wo sie das Laternengehäuse 9 axial durchsetzen und zu einem nicht dargestellten Antrieb des Doppelsitzventils V_{R} geführt sind. Der Leckagehohlraum 14 ist über eine durch eine innere Mantelfläche 11 c des zweiten Schließgliedes 11 begrenzte Ablaufbohrung **(****Figur 6****)** mit dem Innenraum des Leckage- und Ablaufgehäuses 8 verbunden, der in den Ablaufanschluss 8a ausmündet.

Das Leckage- und Ablaufgehäuse 8 ist laternengehäuseseitig durch einen Deckelteil 16 verschlossen **(****Figur 6a****),** der gehäuseseitig mittels einer weiteren Gehäusedichtung 21 und ventilstangenseitig mittels einer ersten Stangendichtung 20 abgedichtet ist. Der Deckelteil 16 wird über eine am Laternengehäuse 9 befestigte Verschlussplatte 9a form- und kraftschlüssig fixiert. Die Verbindung zwischen dem mit dem dritten Klemmflansch 8b versehenen Leckage- und Ablaufgehäuse 8 und der mit einem korrespondierenden vierten Klemmflansch 9b versehenen Verschlussplatte 9a erfolgt über einen weiteren Spannring 29. Die form- und kraftschlüssige Einbettung der ersten Stangendichtung 20 wird über einen zweiten Ring 18 bewirkt, der über einen ersten Ring 17 in der Verschlussplatte 9a lagefixiert ist.

In dem sich an das Leckage- und Ablaufgehäuse 8 anschließenden Laternengehäuse 9 ist ein Reinigungsmittelanschluss 27 angeordnet, der mit einem zwischen den Ventilstangen 10a, 11a gebildeten Ringspalt 26 in Verbindung steht, wobei letzterer an seinem dem Reinigungsmittelanschluss 27 abgewandten Ende über eine Reinigungsdüse 15 in den Leckagehohlraum 14 einmündet. Die Reinigungsdüse 15 besteht aus einem Düseneinsatz 15a und einem diesen in seiner Lage fixierenden Sicherungsring 15b.

An der Ventilstange 10a ist radial außenseits ein ringförmiger erster Anschlag 10b vorgesehen ist, der mit einem an der Innenseite der zweiten Ventilstange 11a korrespondierenden ringförmigen zweiten Anschlag 11d im Zuge der Öffnungsbewegung des Doppelsitzventils V_{R}, und hier zum Zeitpunkt der Mitnahme des zweiten Schließgliedes 11 durch das erste Schließglied 10, zusammenwirkt.

Die dargestellte horizontale Anordnung des Doppelsitzventils V_{R} stellt eine bevorzugte Anordnung dar, die deshalb möglich ist, weil selbst in dieser Lage durch die vorstehend beschriebene Ausgestaltung des Doppelsitzventils V_{R} eine Selbstentleerung des Leckagehohlraumes 14 ohne Pfützenbildung möglich ist. Im allgemeinsten Falle ist eine hinsichtlich möglicher Einbaulagen aus der US 4 436 106 A bereits bekannte schwerkraftseitig abfallende Anordnung der Doppelsitzventile V_{R} am jeweiligen hohlen Gebilde Bia vorgesehen, wobei, bezogen auf die Anordnungslage, die Längsachse der konzentrisch zueinander angeordneten Schließglieder 10, 11 und ihrer Ventilstangen 10a, 11a waagerecht oder, von den Schließgliedern 10, 11 aus gesehen, bis zu einem Winkel gegen die Waagerechte abfallend verläuft, und wobei dabei eine an der tiefsten Stelle verlaufende Mantellinie der inneren Mantelfläche 11c gleichfalls wenigstens waagerecht oder unter einem Winkel gegen die Waagerechte abfallend verläuft.

Das hohle Gebilde B1 a bis Bna kann jeweils auch aus einer Aggregation von einer Anzahl einzelner Gebildeabschnitten 5 zusammengesetzt sein (s. hierzu **Figuren 1****,** **2****,** **2a****,** **7****),** die in Richtung der Längsachse L des Ventilverteilerbaumes B1 bis Bn fluiddurchgängig miteinander verbunden sind und jeweils mindestens auf einer Seite die Anschlussöffnung 6a aufweisen. Die Gebildeabschnitte 5 können in Form von Gehäuseteilen B1a.1 bis B6a.1 und B1a.2 bis B6a.2 (s. **Figur 7****;** im allgemeinsten Falle Bia.1 bis Bia.m mit Gehäuseteilen 1 bis m des hohlen Gebildes Bia) unterschiedlich groß ausgebildet sein, wobei dann beispielsweise die jeweilige Anschlussöffnung 6a einen von der Größe des jeweils zugeordneten Gebildeabschnitts 5 abhängigen Durchtrittsquerschnitt aufweisen kann. Bei mehr als einer Anschlussöffnung 6a am jeweiligen Gebildeabschnitt 5 werden im Bedarfsfall auch unterschiedlich große Durchtrittsquerschnitte der Anschlussöffnungen 6a ausgeführt.

**Figur 7** zeigt, dass das hohle Gebilde B1a bis B6a bei einer aus sechs Ventilverteilerbäumen B1 bis B6 bestehenden Vorrichtung (im allgemeinsten Falle Bia) beispielhaft aus zwei Gebildeabschnitten 5 zusammengesetzt sein kann. An das Ringgehäuse 6 (s. hierzu **Figur 2a****)** des unteren Gebildeabschnittes 5 schließt sich, jeweils quer zu dessen Längsrichtung, beiderseits das Ventilgehäuse 7 des Doppelsitzventils V_{R} an, an dessen Rohranschluss 7a (rechte Seite) die einzige Rohrleitung 2 des ersten Rohrsystems 2 herangeführt ist. Im Ausführungsbeispiel ist vorgesehen, dass der Rohranschluss 7a am Ventilgehäuse 7, bezogen auf die Anordnungslage, mit seiner untersten inneren Mantellinie am tiefsten Punkt des Innenraumes des Ventilgehäuses 7 tangential einmündet.

Das am unteren Gebildeabschnitt 5 linksseitig angeordnete Ventilgehäuse 7 mündet über den senkrecht nach unten orientierten Rohranschluss 7a in eine molchbare zweite Rohrleitung 3.2* aus der zweiten Gruppe Rohrleitungen des zweiten Rohrsystems 3 ein. Diese Rohrleitung 3.2* ist durchgängig mit einem unversperrten, Kreisform aufweisenden Durchtrittsquerschnitt ausgeführt, wodurch sie für einen Molch durchgängig ist; sie ist an dem zugeordneten Ventilgehäuse 7 des vermischungssicheren Doppelsitzventils V_{R} vorbeigeführt und mit letzterem fluidgängig verbunden. Prinzipiell kann jede der Rohrleitungen 2.1 bis 2.n der ersten Gruppe Rohrleitungen des ersten Rohrsystems 2 und jede der Rohrleitungen 3.1 bis 3.n der zweiten Gruppe Rohrleitungen des zweiten Rohrsystems 3 und ggf. auch das dritte Rohrsystem 4 in der vorbeschriebenen Weise molchbar ausgeführt werden. Am oberen Gebildeabschnitt 5 (Figur 7) ist nur linksseitig das Ventilgehäuse 7 eines weiteren Doppelsitzventils V_{R} angeordnet, an dessen Rohranschluss 7a die erste Rohrleitung 3.1 aus der zweiten Gruppe Rohrleitungen des zweiten Rohrsystems 3 herangeführt ist. Im Ausführungsbeispiel ist vorgesehen, dass der Rohranschluss 7a am Ventilgehäuse 7, bezogen auf die Anordnungslage, mit seiner untersten inneren Mantellinie am tiefsten Punkt des Innenraumes des Ventilgehäuses 7 tangential einmündet.

Das jeweilige Ventilgehäuse 7 ist Teil des vermischungssicheren Doppelsitzventils V_{R}. An das Ventilgehäuse 7 schließt sich, in Längsrichtung des Doppelsichtventils V_{R} gesehen, seitlich das Leckage- und Ablaufgehäuse 8 mit dem Ablaufanschluss 8a sowie ein nicht näher bezeichneter Antrieb an, wobei letzterer mit dem Leckage- und Ablaufgehäuse 8 über das Laternengehäuse 9 verbunden ist.

Die an einem senkrecht angeordneten Ventilverteilerbaum B3 (im allgemeinsten Falle Bi) jeweils einseitige Anordnung von drei übereinander angeordneten vermischungssicheren Doppelsitzventilen V_{R} entsprechend der in **Figur 1** bereits beschriebenen Verrohrung (dort der hintere Ventilverteilerbaum B3) zeigt **Figur 8****.** Hinsichtlich der weiteren Ausgestaltung dieser Aggregation sei auf die Ausführungen zu **Figur 7** verwiesen.

Eine vorteilhafte Ausführungsform des Gebildeabschnitts 5, aus dem sich das hohle Gebilde B1a (Bia) des Ventilverteilerbaumes B1 (Bi) zusammensetzt, mit beiderseits angeordneten und miteinander fluchtenden leckagesicherten Doppelsitzventilen V_{R}, wie er vorzugsweise im waagerecht angeordneten Ventilverteilerbaum B1 (Bi) zur Anwendung kommt (zweite Richtungsvariante), zeigen die **Figuren 9a** bis **9c****.** Um Sumpfbildung zu vermeiden und somit eine vollständige Restentleerung zu erreichen, ist der Rohranschluss 7a tangential im unteren Bereich des Ventilgehäuses 7 angeordnet. Das hohle Gebilde B1a (Bia), das in jedem Falle die Form eines Kreisquerschnitt aufweisenden Rohrleitungsabschnittes besitzt, mündet derart in den oberen Bereich des Gebildeabschnitts 5 ein, dass bei Vermeidung eines sumpfbildenden Raumes im Gebildeabschnitt 5 unterhalb des hohlen Gebildes B1a (Bia) durch besondere formgebende Maßnahmen ein restloser Abfluss der Flüssigkeit aus letzterem in die beiderseits angeschlossenen Ventilgehäuse 8 sichergestellt ist.

Bei der zweiten Richtungsvariante verläuft der Ventilverteilerbaum Bi quer, im Regelfall waagerecht, und die erste und ggf. die zweite Gruppe Rohrleitungen 2.1 bis 2.n und 3.1 bis 3.n sind jeweils in zueinander parallelen Ebenen nebeneinander angeordnet und auf einer Seite oder auf gegenüberliegenden Seiten des hohlen Gebildes Bia und in sich mit dessen Längsachse L kreuzenden Ebenen an diesem vorbeigeführt. Eine derartige Verrohrung kommt dann zur Anwendung, wenn die Bauhöhe unterhalb des Tanks Ti oder des Prozessaggregats Pi begrenzt und dadurch die Anordnung eines Ventilverteilerbaumes Bi mit einem von unten nach oben aufsteigenden, im Regelfall mit einem senkrechten Verlauf, nicht möglich ist und wenn gleichzeitig die gesamte relevante Verrohrung unterhalb des Auslaufs des Tanks Ti oder des Prozessaggregats Pi anzuordnen ist.

Aus dem oben Genannten wird verständlich, dass verschiedene Modifikationen und Varianten der Vorrichtung zur Verrohrung von Prozessanlagen der Nahrungsmittel- und Getränkeindustrie realisiert werden können, ohne vom neuen Konzept der vorliegenden Erfindung abzuweichen. Dies ist so zu verstehen, dass keine Beschränkung auf die speziellen Ausführungsformen beabsichtigt ist, welche hier illustriert worden sind. Die Offenbarung soll alle solchen Abwandlungen umfassen, die sich innerhalb des von den Ansprüchen beanspruchten Schutzbereichs befinden.

### BEZUGSZEICHENLISTE

- 1: Vorrichtung

- 2: erstes Rohrsystem
- 2.1, 2.2, ..., 2.n: erste Gruppe Rohrleitungen
- 2.i: eine der Rohrleitungen aus der ersten Gruppe
- 2.1: erste Rohrleitung aus der ersten Gruppe
- 2.2: zweite Rohrleitung aus der ersten Gruppe

- 3: zweites Rohrsystem (z.B. Entleeren)
- 3.1, 3.2, ..., 3.n: zweite Gruppe Rohrleitungen
- 3.i: eine der Rohrleitungen aus der zweiten Gruppe
- 3.1: erste Rohrleitung aus der zweiten Gruppe
- 3.2: zweite Rohrleitung aus der zweiten Gruppe
- 3.2*: molchbare zweite Rohrleitung aus der zweiten Gruppe

- (4): drittes Rohrsystem (z.B. Reinigung)

- 5: Gebildeabschnitt

- 6: Ringgehäuse
- 6a: Anschlussöffnung
- 6b: erste Sitzfläche
- 6c: zweite Sitzfläche
- 6d: zylindrische Ausnehmung
- 6e: sitzflächenseitige Anschlagfläche

- 7: erstes Ventilgehäuse
- 7a: Rohranschluss
- 7b: erster Klemmflansch

- 7*: zweites Ventilgehäuse
- 7a*: modifizierter Rohranschluss
- 7b*: zweiter Klemmflansch

- 8: Leckage- und Ablaufgehäuse
- 8a: Ablaufanschluss
- 8b: dritter Klemmflansch

- 9: Laternengehäuse
- 9a: Verschlussplatte
- 9b: vierter Klemmflansch

- 10: erstes Schließglied (Schieberkolben)
- 10a: erste Ventilstange
- 10b: (ringförmiger) erster Anschlag

- 11: zweites Schließglied (Sitzteller)
- 11a: zweite Ventilstange (Hohlstange)
- 11b: zylindrische Aufnahmebohrung
- 11c: innere Mantelfläche
- 11d: (ringförmiger) zweiter Anschlag
- 11e: äußere Mantelfläche
- 11f: Traverse
- 11g: schließgliedseitige Anschlagfläche (radial innenseitig)

- 12: erste Sitzdichtung
- 13: zweite Sitzdichtung
- 14: Leckagehohlraum

- 15: Reinigungsdüse
- 15a: Düseneinsatz
- 15b: Sicherungsring

- 16: Deckelteil
- 17: erster Ring
- 18: zweiter Ring
- 20: erste Stangendichtung
- 21: Gehäusedichtung

- 22: Drainagering
- 22a: Drainagebohrung

- 23: zweite Stangendichtung
- 24: dritte Stangendichtung
- 25: Führungsring
- 26: Ringspalt
- 27: Reinigungsmittelanschluss
- 28: Spülanschluss
- 29: Spannring

- B1 bis Bn: Ventilverteilerbaum
- Bi: einer der Ventilverteilerbäume B1 bis Bn
- B1a bis Bna: hohles Gebilde
- Bia: der Rohrleitung Ri zugeordnetes hohles Gebilde B1a bis Bna
- Bia.1 bis Bia.m: Gehäuseteile 1 bis m des hohlen Gebildes Bia

- D1: erster Drosselspalt
- D2: zweiter Drosselspalt

- H: Öffnungshub
- H1: erster Teilhub
- H2: zweiter Teilhub

- L: Längsachse des hohlen GebiIdesNentilverteilerbaumes

- P: Prozessaggregat (allgemein)
- P1: erstes Prozessaggregat
- P2: zweites Prozessaggregat
- P3: drittes Prozessaggregat
- Pi: i-tes Prozessaggregat
- Pn: n-tes Prozessaggregat

- R: Rohrverbindungen (allgemein); die an das obere Ende des jeweiligen Ventilverteilerbaumes B1 bis Bn herangeführt ist
- R1: erste Rohrverbindung
- R2: zweite Rohrverbindung
- R3: dritte Rohrverbindung
- Ri: Ventilverteilerbaum Bi zugeordnete Rohrverbindung
- Rn: n-te Rohrverbindung

- T: Tank (allgemein)
- T1: erster Tank
- T2: zweiter Tank
- T3: dritter Tank
- Ti: i-ter Tank
- Tn: n-ter Tank

- T1a bis Tna: unterer Tankboden des jeweiligen Tanks T1 bis Tn
- Tia: i-ter Tankboden

- V_{R}: Doppelsitzventil

## Patentansprüche

1. Verrohrungssystem für Prozessanlagen der Nahrungsmittel- und Getränkeindustrie, das einen Tank (T) und/oder ein Prozessaggregat (P) der Prozessanlage mit einem Rohrsystem (2, 3, 4) über im Sitzbereich vermischungssicher ausgestaltete Doppelsitzventile (V_{R}) verbindet,
mit dem aus wenigstens einer gruppe Rohrleitungen (2.1, 2.2, ..., 2.i, ..., 2.n; 3.1, 3.2, ..., 3.1, ..., 3.n; 4) bestehenden Rohrsystem (2, 3, 4), mit wenigstens einem Ventilverteilerbaum (B1, B2, ..., Bi, ..., Bn), der als langgestrecktes hohles Gebilde (B1a, B2a, ..., Bia, ..., Bna) ausgeführt ist und der wenigstens eine Anschlussöffnung (6a) zum Verbinden seines Innenraumes mit jeder der Rohrleitungen (2.1, 2.2, ..., 2.i, ..., 2.n; 3.1, 3.2, ..., 3.1, ..., 3.n; 4) besitzt, wobei wenigstens eine erste Gruppe Rohrleitungen (2.1, 2.2, ..., 2.i, ..., 2.n) und im Bedarfsfall zusätzlich eine zweite Gruppe Rohrleitungen (3.1, 3.2, ..., 3.i, ..., 3.n) auf einander gegenüberliegenden Seiten des hohlen Gebildes (B1a, B2a, ..., Bia, ..., Bna) an die zugeordnete(n) Anschlussöffnung(en) (6a) heran- und an dem hohlen Gebilde vorbeigeführt sind,
wobei der jeweilige Ventilverteilerbaum (B1, B2, ..., Bi, ..., Bn) unmittelbar im unteren Tankboden (T1a , T2a, ..., Tia, ..., Tna) eines jeweils zugeordneten Tanks (T; T1, T2, ..., Ti, ..., Tn) der Prozessanlage ausmündet oder/und wobei der jeweilige Ventilverteilerbaum (B1, B2, ..., Bi, ..., Bn) über eine zugeordnete Rohrverbindung (R; R1, R2, ..., Ri, ..., Rn) mit dem zugeordneten Prozessaggregat (P; P1, P2, ..., Pi, ..., Pn) oder Tank (T; T1, T2, ..., Ti, ..., Tn) der Prozessanlage verbunden ist und der an den Ventilverteilerbaum (B1, B2, ..., Bi, ..., Bn) angeschlossene Endabschnitt der Rohrverbindung (R; R1, R2, ..., Ri, ..., Rn) senkrecht oder waagerecht oder wie auch immer geneigt verläuft,
und wobei das jeweilige Doppelsitzventil (V_{R}) in jeder Verbindung zwischen der Rohrleitung (2.1, 2.2, ..., 2.i, ..., 2.n; 3.1, 3.2, ..., 3.1, ..., 3.n; 4) und der zugeordneten Anschlussöffnung (6a) angeordnet ist und diese Verbindung in unmittelbarer Nähe zum hohlen Gebilde (B1a, B2a, ..., Bia, ..., Bna) schaltet,
**dadurch gekennzeichnet,**
• **dass** das Doppelsitzventil (V_{R}) mit zwei seriell angeordneten Schließgliedern (10,11) ausgebildet ist, die in der Schließstellung des Ventils das Überströmen von Fluiden vom hohlen Gebilde (B1a, B2a, ..., Bia, ..., Bna) in ein Ventilgehäuse (7; 7*) verhindern, wobei an letzteres jeweils eine der Rohrleitungen (2.1, 2.2, ..., 2.i, ..., 2.n; 3.1, 3.2, ..., 3.1, ..., 3.n; 4) angeschlossen ist,
• **dass** die Schließglieder (10, 11) sowohl in der Schließ- als auch in der Offenstellung einen Leckagehohlraum (14) begrenzen, der mindestens einen Verbindungsweg mit der Umgebung des Doppelsitzventils (V_{R}) aufweist,
• **dass** das erste Schließglied (10) unabhängig angetrieben ist und bei seiner Öffnungsbewegung am als Sitzteller ausgebildeten zweiten Schließglied (11) dichtend zur Anlage kommt und dieses gleichfalls in die Offenstellung überführt,
• **dass** das zweite Schließglied (11) als Hohlstange ausgebildet ist, die an ihrem dem ersten Schließglied (10) zugewandten Ende eine zweite Sitzdichtung (13) aufweist, die mit einer an eine zylindrische erste Sitzfläche (6b) angrenzenden zweiten Sitzfläche (6c) zusammenwirkt,
• **dass** das als Schieberkolben ausgebildete erste Schließglied (10) eine radial wirkende erste Sitzdichtung (12) aufweist, die in der Schließstellung des Ventils in der ersten Sitzfläche (6b), welche die Anschlussöffnung (6a) ausbildet, dichtend Aufnahme findet,
• **dass** das hohlstangenförmige zweite Schließglied (11) an seinem die zweite Sitzdichtung (13) aufnehmenden Endabschnitt innenseits eine zylindrische Aufnahmebohrung (11b) aufweist, die durchmessergleich mit der zylindrischen ersten Sitzfläche (6b) ausgebildet ist,
• **dass** in der Schließstellung des zweiten Schließgliedes (11) die Aufnahmebohrung (11 b) und die erste Sitzfläche (6b) bündig ineinander übergehen,
• **dass** das zweite Schließglied (11) mit einer schließgliedseitigen Anschlagfläche (11g) über einen metallischen Anschlag an der zweiten Sitzfläche (6c) verfügt, und wobei eine zugeordnete sitzflächenseitige Anschlagfläche (6e) unmittelbar an die erste Sitzfläche (6b) angrenzt,
• und **dass** konzentrisch ineinander angeordneten Ventilstangen (10a, 11a) für die Schließglieder (10, 11) vorgesehen sind, die einseitig durch das Ventilgehäuse (7; 7*) hindurch- und aus diesem herausgeführt sind.

2. Verrohrungssystem nach Anspruch 1,
**dadurch gekennzeichnet,**
**dass** der Ventilverteilerbaum (B1, B2, ..., Bi, ..., Bn) einen von unten nach oben aufsteigenden, im Regelfall einen senkrechten Verlauf aufweist, und dass die erste und die zweite Gruppe Rohrleitungen (2.1, 2.2, ..., 2.i, ..., 2.n; 3.1, 3.2, ..., 3.1, ..., 3.n) in jeweils reihenförmiger Anordnung untereinander und in zueinander und zur Längsachse des hohlen Gebildes parallelen Ebenen angeordnet (2.1, 3.1; 2.2, 3.2; .... 2.i, 3.i, ..., 2.n, 3.n) sind.

3. Verrohrungssystem nach Anspruch 1,
**dadurch gekennzeichnet,**
**dass** der Ventilverteilerbaum (B1, B2, ..., Bi, ..., Bn) quer, im Regelfall waagerecht verläuft, und dass die erste und die zweite Gruppe Rohrleitungen (2.1, 2.2, ..., 2.i, ..., 2.n; 3.1, 3.2, ..., 3.1, ..., 3.n) jeweils in zueinander parallelen Ebenen nebeneinander angeordnet und auf einer Seite oder auf gegenüberliegenden Seiten des hohlen Gebildes (B1a, B2a, ..., Bia, ..., Bna) und in sich mit dessen Längsachse (L) kreuzenden Ebenen an diesem vorbeigeführt sind.

4. Verrohrungssystem nach einem der Ansprüche 1 bis 3,
**dadurch gekennzeichnet,**
**dass** das Doppelsitzventil (V_{R}) durch einen jeweiligen Teilhub (H1, H2) seiner Schließglieder (10, 11) einer Sitzreinigung unterworfen wird.

5. Verrohrungssystem nach Anspruch 4,
**dadurch gekennzeichnet,**
**dass** die Sitzreinigung des ersten Schließgliedes (10) durch den der Offnungsbewegung mit einem Öffnungshub (H) gegensinnigen ersten Teilhub (H1) und jene des zweiten Schließgliedes (11) durch den gleichsinnigen zweiten Teilhub (H2) erfolgen, und dass in der jeweiligen Sitzreinigungsstellung am ersten Schließglied (10) ein leckageraumseitiger erster Drosselspalt (D1) und am zweiten Schließglied (11) ein leckageraumabgewandter zweiter Drosselspalt (D2) vorgesehen sind.

6. Verrohrungssystem nach einem der Ansprüche 1 bis 5,
**dadurch gekennzeichnet,**
**dass** das hohle Gebilde (B1a, B2a, ..., Bia, ..., Bna) im Umfassungsbereich seiner Anschlussöffriung (6a) als Ringgehäuse (6) ausgebildet ist, das die Sitzflächen (6b, 6c) aufnimmt und dem Anschluss des Ventilgehäuses (7; 7*) dient.

7. Verrohrungssystem nach einem der Ansprüche 1 bis 6,
**dadurch gekennzeichnet,**
**dass** das als Hohlstange ausgebildete zweite Schließglied (11) an seiner äußeren Mantelfläche (11e) zylindrisch ausgebildet ist.

8. Verrohrungssystem nach Anspruch 7,
**dadurch gekennzeichnet,**
**dass** das zweite Schließglied (11) in ein Leckage- und Ablaufgehäuse (8) ausmündet, das sich an der dem Ringgehäuse (6) abgewandten Seite des Ventilgehäuses (7; 7*) an letzteres anschließt, und dort geführt und abgedichtet ist.

9. Verrohrungssystem nach Anspruch 8,
**dadurch gekennzeichnet,**
**dass** das zweite Schließglied (11) im Bereich des Innenraumes des Leckage-und Ablaufgehäuses (8) auf die im Durchmesser kleinere zweite Ventilstange (11a) übergeht und eine fluiddurchlässige Verbindung zwischen dem Innenraum des zweiten Schließgliedes (11) und dem Innenraum der hohlzylindrischen zweiten Ventilstange (11a) über wenigstens eine im Wesentlichen radial orientierte Traverse (11f) vorgesehen ist.

10. Verrohrungssystem nach Anspruch 8 oder 9,
**dadurch gekennzeichnet,**
**dass** die Ventilstangen (10a, 11a) an der dem Ventilgehäuse (7; 7*) abgewandten Seite des Leckage- und Ablaufgehäuses (8) durch letzteres hindurch- und aus diesem herausgeführt sind.

11. Verrohrungssystem nach einem der Ansprüche 8 bis 10,
**dadurch gekennzeichnet,**
**dass** der Leckagehohlraum (14) über eine durch eine innere Mantelfläche (11c) des zweiten Schließgliedes (11) begrenzte Ablaufbohrung mit dem Innenraum des Leckage- und Ablaufgehäuses (8) verbunden ist, der in einen Ablaufanschluss (8a) ausmündet.

12. Verrohrungssystem nach einem der Ansprüche 1 bis 11,
**dadurch gekennzeichnet,**
**dass** ein Rohranschluss (7a; 7a*) am Ventilgehäuse (7; 7*), bezogen auf die Anordnungslage des Ventilgehäuses (7; 7*), mit seiner untersten inneren Mantellinie am tiefsten Punkt des Innenraumes des Ventilgehäuses (7; 7*) tangential einmündet.

13. Verrohrungssystem nach einem der Ansprüche 1 bis 12,
**dadurch gekennzeichnet,**
**dass**, bezogen auf die Anordnungslage, die Längsachse des Ventilgehäuses (7; 7*) waagerecht oder, von der Anschlussöffnung (6a) aus gesehen, bis zu einem Winkel gegen die Waagerechte abfallend verläuft, und dass dabei eine innere Umfangswand (11c) des Leckagehohlraumes (14) schwerkraftseitig zu dessen Austrittsöffnung hin ein Gefälle aufweist.

14. Verrohrungssystem nach einem der Ansprüche 1 bis 13,
**dadurch gekennzeichnet,**
**dass** in einem sich an das Leckage- und Ablaufgehäuse (8) anschließenden Laternengehäuse (9) ein Reinigungsmittelanschluss (27) angeordnet ist, der mit einem zwischen den Ventilstangen (10a, 11a) gebildeten Ringspalt (26) in Verbindung steht, wobei letzterer an seinem dem Reinigungsmittelanschluss (27) abgewandten Ende über eine Reinigungsdüse (15; 15a, 15b) in den Leckagehohlraum (14) einmündet.

15. Verrohrungssystem nach einem der Ansprüche 1 bis 14;
**dadurch gekennzeichnet,**
**dass** an der Ventilstange (10a) radial außenseits ein ringförmiger erster Anschlag (10b) vorgesehen ist, der im Zuge der Öffnungsbewegung des Ventils mit einem an der Innenseite der zweiten Ventilstange (11a) korrespondierenden ringförmigen zweiten Anschlag (11d), und hier zum Zeitpunkt der Mitnahme des zweiten Schließgliedes (11) durch das erste Schließglied (10), zusammenwirkt.

16. Verrohrungssystem nach einem der Ansprüche 1 bis 15,
**dadurch gekennzeichnet,**
**dass** die Rohrleitung (2.1, 2.2, ..., 2.i, ..., 2.n; 3.1, 3.2, ..., 3.1, ..., 3.n; 4) durchgängig mit einem unversperrten, Kreisform aufweisenden Durchtrittsquerschnitt ausgeführt und an einem jeweiligen Ventilgehäuse (7; 7*) des Doppelsitzventils (V_{R}) vorbeigeführt und mit letzterem jeweils fluidgängig verbunden ist.

17. Verrohrungssystem nach einem der Ansprüche 1 bis 16,
**dadurch gekennzeichnet,**
**dass** das hohle Gebilde (B1a, B2a, ..., Bia, ..., Bna) als zylindrisches Rohr ausgebildet ist.

18. Verrohrungssystem nach einem der Ansprüche 1 bis 17,
**dadurch gekennzeichnet,**
**dass** das dem jeweiligen Tank (T1, T2, ... , Ti, ... , Tn) oder der jeweiligen Rohrverbindung (R; R1, R2, ..., Ri, ..., Rn) abgewandte unterste Ende des hohlen Gebildes (B1a, B2a, ..., Bia, ..., Bna) mit einem dritten Rohrsystem (4) verbunden ist.

19. Verrohrungssystem nach einem der Ansprüche 1 bis 18,
**dadurch gekennzeichnet, dass** die Rohrleitungen (2.1, 2.2, ..., 2.i, ..., 2.n; 3.1, 3.2, ..., 3.1, ..., 3.n; 4) jeweils als durchgehende, allen Rohrverbindungen (R; R1, R2, ..., Ri, ..., Rn) in gleicher Funktion zugeordnete Rohrleitungen ausgeführt sind.

20. Verrohrungssystem nach einem der Ansprüche 1 bis 19,
**dadurch gekennzeichnet,**
**dass** die Ventilverteilerbäume (B1, B2, ..., Bi, ..., Bn) eine reihen- oder matrixförmige Anordnung aufweisen.

21. Verrohrungssystem nach einem der Ansprüche 1 bis 20,
**dadurch gekennzeichnet,**
**dass** das hohle Gebilde (B1a, B2a, ..., Bia, ..., Bna) jeweils aus einer Aggregation von einzelnen Gebildeabschnitten (5) zusammengesetzt ist, die in Richtung der Längsachse (L) des hohlen Gebildes fluiddurchgängig miteinander verbunden sind und jeweils mindestens eine Anschlussöffnung (6a) aufweisen.

22. Verrohrungssystem nach Anspruch 21,
**dadurch gekennzeichnet,**
**dass** die Gebildeabschnitte (5) in Form von Gehäuseteilen (Bia.1 bis Bia.m) unterschiedlich groß ausgebildet sind.

23. Verrohrungssystem nach Anspruch 22,
**dadurch gekennzeichnet,**
**dass** die Anschlussöffnung (6a) einen von der Größe des jeweils zugeordneten Gehäuseteils (Bia.1 bis Bia.m) abhängigen Durchtrittsquerschnitt aufweist.

## Claims

1. Piping system for process plants of the food and beverage industry, that connects a tank (T) and/or a process assembly (P) of the process plant to a pipe system (2, 3, 4) via double seat valves (VR) formed mix-proof in the seat, having the pipe system (2, 3, 4) composed of
at least one goup of pipelines (2.1, 2.2, ..., 2.i, ..., 2.n; 3.1, 3.2, ..., 3.1, ..., 3.n; 4), having at least one valve distributor tree (B1, B2, ..., Bi, ..., Bn), that is designed as an elongated hollow structure (B1a, B2a, ..., Bia, ... Bna) and that has at least one connector opening (6a) for connecting its interior to each of the pipelines (2.1, 2.2, .., 2.i, ..., 2.n; 3.1, 3.2, ..., 3.1, ..., 3.n; 4), wherein at least one first group of pipelines (2.1, 2.2,..., 2.i,..., 2.n) and if necessary, additionally a second group of pipelines (3.1, 3.2, ..., 3.1, ..., 3.n) are led on opposite sides of the hollow structure (Bla, B2a, ..., Bia, ..., Bna) towards the associated connector opening(s) (6a) and past the hollow structure,
wherein the respective valve distributor tree (B1, B2, ..., Bi, ..., Bn) opens directly into the lower tank bottom (T1a, T2a, Tia, ..., Tna) of a respectively assigned tank (T; T1, T2, ..., Ti, ..., Tn) of the process plant,
or/and wherein the respective valve distributor tree (B1, B2, ..., Bi,..., Bn) is connected via an associated pipe connection (R; R1, R2, ..., Ri, ..., Rn) to the associated process assembly (P; P1, P2, ..., Pi, ..., Pn) or tank (T; T1, T2, ..., Ti, ..., Tn) of the process plant and the end section of the pipe connection (R; R1, R2, ..., Ri, .. Rn) connected to the valve distributor tree (B1, B2, ..., Bi,..., Bn) perpendicularly or horizontal or however, inclined,
having the double seat valve (VR), that is disposed in each connection between the pipeline (2.1, 2.2, ..., 2.1, .., 2.n; 3.1, 3.2, ..., 3.1, ..., 3.n; 4) and the associated connector opening (6a) and this connection switches in the immediate vicinity to the hollow structure (B1a, B2a, ..., Bia, ..., Bna),
**characterized in that**
• the double seat valve (VR) is designed with two serially disposed closing members (10, 11) that in the closed position of the valve prevent the overflow of fluids from the hollow structure (B1a, B2a, ..., Bia, ..., Bna) into a valve housing (7; 7*), wherein in each case one of the pipelines (2.1, 2.2, ..., 2.i, ..., 2.n; 3.1, 3.2, ..., 3.1, ..., 3.n; 4) is connected to the latter,
• that the closing members (10, 11) in both the closed and in the open position delimit a leakage cavity (14) that has at least one connection path to the surroundings of the double seat valve (VR),
• that the first closing member (10) is independently driven and in the course of its opening movement comes into scaling contact at the second closing member (11) designed as a seat plate and transfers this too into the open position,
• that the second closing member (11) is designed as a hollow rod, that on its end facing toward the first closing member (10), has a second seat seal (13) that acts together with a second seat (6c) abutting at a cylindrical first seat (6b), wherein the first closing member (10) designed as a valve piston has a radially acting first scat seal (12) that in the closed position of the valve is sealingly received in the first seat (6b), which forms the connector opening (6a),
• that the second closing member (11) is designed as a hollow rod, that on its end facing toward the first closing member (10), has a second scat seal (13) that acts together with a second seat (6c) abutting at a cylindrical first seat (6b),
• the first closing member (10) designed as a valve piston has a radially acting first seat seal (12) that in the closed position of the valve is sealingly received in the first seat (6b), which forms the connector opening (6a),
• that the second closing member (11), designed as a hollow rod, at its end section receiving the second seat seal (13) on the inside has a cylindrical receiving bore (11b) that is formed with the same diameter as a cylindrical first seat (6b),
• that in the closed position of the second closing member (11) the receiving bore (11b) and the first seat (6b) arc emerging together in a flush manner,
• that the second closing member (11) with a closing member-side stop surface (11g) has a metallic stop at the second seat (6c), and wherein an assigned seat-side stop surface (6e) borders directly at the first seat (6b),
• and that valve rods (10a, 11a) disposed concentrically within each other are provided for the closing members (10, 11) which arc led on one side through and out of the valve housing (7; 7*).

2. The piping system according to claim 1,
**characterized in that**
the valve distributor tree (B1, B2, ..., Bi, ..., Bn) has a progression from below upwards, as a rule, a perpendicular, and that the first and second group of pipelines (2.1, 2.2, ..., 2.i, ..., 2.n; 3.1, 3.2, ..., 3.1, ..., 3.n) are disposed in each case in an arrangement forming rows below one another, in planes (2.1, 3.1; 2.2, 3.2; ..., 2.i, 3.i, ..., 2.n, 3.n) parallel to each other and to the longitudinal axis of the hollow structure.

3. The piping system according to claim 1,
**characterized in that**
the valve distribution tree (B1, B2, . , Bei, ..., Bn) runs crosswise, as a rule horizontally, and that the first and the second group of pipelines (2.1, 2.2, ..., 2.i, ..., 2.n; 3.1, 3.2, ..., 3.1, .., 3.n) are each disposed next to each other in planes parallel to each other, and on the one side or on opposite sides of the hollow structure (Bla, B2a, ..., Bia, ..., Bna), and are led past it in the planes crossing its longitudinal axis (L).

4. The piping system according to one of the claims 1 to 3,
**characterized in that**
the double seat valve (VR) is subjected to a seat cleaning by a respective partial lift (H1, M2) of its closing members (10, 11).

5. The piping system according to claim 4,
**characterized in that**
the scat cleaning of the first closing member (10) occurs through first partial lift (H1) in the direction opposite to the opening movement having an opening lift (H), and that of the second closing member (11) through the second partial lift (H2) in the same direction, and that in the respective scat cleaning position, a leakage-side first throttle gap (D1) is provided at the first closing member (10) and a second throttle gap (D2) provided is provided at the second closing member (11) on the side facing away from the leakage cavity.

6. The piping system according to one of the claims 1 to 5,
**characterized in that**
the hollow structure (B1a, B2a, ..., Bia, ..., Bna) is designed in the area surrounding its connector opening (6a) as an annular housing (6) that receives the seats (6b, 6c) and serves the connection of the valve housing (7; 7*).

7. The piping system according to one of the claims 1 to 6,
**characterized in that**
the second closing member (11) designed as a hollow rod, is designed cylindrically at its outer peripheral surface (11e).

8. The piping system according to claim 7,
**characterized in that**
the second closing member (11) opens into a leakage and drainage housing (8) that connects to the latter at the side of the valve housing (7; 7*) facing away From the annular housing (6), and is led there and sealed.

9. The piping system according to claim 8,
**characterized in that**
the second closing member (11) in the area of the interior of the leakage and drainage housing (8) merges into the smaller diameter second valve rod (11a), and a fluid-passable connection is provided between the interior of the second closing member (11) and the interior of the second valve rod (11a) designed as a hollow rod, via at least one traverse (11f) oriented substantially radially.

10. The piping system according to claim 8 or 9,
**characterized in that**
the valve rods (10a, 11a) at the side of the leakage and drainage housing (8) facing the valve housing (7; 7*) arc led through and out of the latter.

11. The piping system according to one of the claims 8 to 10,
**characterized in that**
the leakage cavity (14) is connected, via a drainage bore delimited by an inner peripheral surface (lie) of the second closing member (11), to the interior of the leakage drainage housing (8), that opens into the drainage connection (8a).

12. The piping system according to one of the claims 1 to 11,
**characterized in that**
a pipe connection (7a; 7a*) at the valve housing (7; 7*), relative to the arrangement position of the valve housing (7; 7*) opens tangentially with its lower inner peripheral line at the lowest point of the interior of the valve housing (7; 7*).

13. The piping system according to one of the claims 1 to 12,
**characterized in that**,
relative to the arrangement position, the longitudinal axis of the valve housing (7; 7*) is horizontal or, viewed from the connector opening (6a), progresses declining at an angle to horizontal, and that an inner peripheral wall (11c) of the leakage cavity (14) has a slope on the side of the gravitational force towards its outlet opening.

14. The piping system according to one of the claims 1 to 13,
**characterized in that**
a cleaning agent connection (27) is disposed in the lantern housing (9) connecting to the leakage and drainage housing (8) that is connected to an annular gap (26) formed between the valve rods (10a, 11a), wherein the annular gap at its end facing away from the cleaning agent connection (27) opens into the leakage cavity (14) via a cleaning nozzle (15; 15a, 15b),

15. The piping system according to one of the claims 1 to 14,
**characterized in that**
an annular first stop (10b) is provided radially outwards at the valve rod (10a) that in the course of the opening movement of the double scat valve acts together with a corresponding annular second stop (11d) at the inner side of the second valve rod (11 a), and here at the moment of the second closing member (11) being carried along by the first closing member (10).

16. The piping system according to one of the claims 1 to 15,
**characterized in that**
the pipeline (2.1, 2.2, ..., 2.i, ..., 2.n; 3.1, 3.2, ..., 3.1, ..., 3.n; 4) is designed continuous, having an unobstructed passage cross-section having a circular shape, and is led past at a respective valve housing (7; 7*) of the double scat valve (VR), and is connected in each case to the latter in a fluid-passable manner.

17. The piping system according to one of the claims 1 to 16,
**characterized in that**
the hollow structure (B1a, B2a, ..., Bia, ..., Bna) is designed as a cylindrical pipe.

18. The piping system according to one of the claims 1 to 17,
**characterized in that**
the lowest end of the hollow structure (B1a, B2a, ..., Bia, ..., Bna) facing away from the respective tank (T1, T2, ..., Ti, ..., Tn) or the respective pipe connection (R; R1, R2, ...., Ri, ..., Rn), is connected to a third pipe system (4).

19. The piping system according to one of the claims 1 to 18,
**characterized in that**
the pipelines (2.1, 2,2, ..., 2.i, ..., 2.n; 3.1, 3.2, ..., 3.1, ..., 3.n; 4) are each designed as continuous pipelines assigned to all pipeline connections (R; R1 R2, ..., Ri, ..., Rn) in the same function.

20. The piping system according to one of the claims 1 to 19,
**characterized in that**
the valve distributor trees (B1, B2, ..., Bi, ..., Bn) have an arrangement forming rows or a matrix.

21. The piping system according to one of the claims 1 to 20,
**characterized in that**
the hollow structure (B1a, B2a, ..., Bia, ..., Bna) is composed in each case of an aggregation of individual structure sections (5), which are connected together in the direction of the longitudinal axis (L) of the hollow structure in a fluid-passable manner, and having at least one connector opening (6a), in each case.

22. The piping system according to claim 21,
**characterized in that**
the structure sections (5) arc formed in different sizes in the shape of housing parts (Bia.1 to Bia.m).

23. The piping system according to claim 22,
**characterized in that**
the connector opening (6a) has a passage cross-section depending on the size of the respectively assigned housing part (Bia.1 to Bia.m).

## Revendications

1. Système de tuyauterie pour des installations de traitement des industries alimentaires et des boissons qui relie un réservoir (T) et/ou un groupe de traitement (P) de l'installation de traitement à un système de tuyaux (2, 3, 4) via des soupapes à double siège (V_{R}) dotées d'une protection anti-mélange dans la zone de siège,
comprenant le système de tuyaux (2, 3, 4) composé d'au moins un groupe de conduites (2.1, 2.2, ..., 2.i,..., 2.n; 3.1, 3.2, ..., 3.1, ..., 3.n; 4), comprenant au moins un arbre distributeur à soupapes (B1, B2,..., Bi, ..., Bn) conçu en forme de structure creuse allongée (B1a, B2a, ,.., Bia,..., Bna) et qui possède au moins un orifice de raccordement (6a) pour raccorder son espace interne à chacune des conduites (2.1, 2.2, ..., 2.i, ..., 2.n; 3.1, 3.2, ..., 3.1, ..., 3.n; 4), au moins un premier groupe de conduites (2.1, 2.2, ..., 2.i,..., 2.n) et si nécessaire en sus un second groupe de conduites (3.1, 3.2, ..., 3.1, ..., 3.n) sur des faces opposées de la structure creuse (B1a, B2a, ..., Bia,..., Bna) étant approchés de(des) l'orifice(s) de raccordcmcnt associé(s) (6a) et dirigés devant la structure creuse,
chaque arbre distributeur à soupapes (B1, B2,...Bi, ..., Bn) débouche directement dans le fond inférieur de réservoir (T1a, T2a, ..., Tia,..., Tna) d'un réservoir associé (T; T1, T2,..., Ti, ...Tn) de l'installation de traitement ou/et chaque arbre distributeur à soupapes (B1, B2,..., Bi, ..., Bn) est relié par un raccord de tuyauterie associé (R; R1, R2, ..., Ri, ..., Rn) au goupe de traitement associé (P; P1, P2, ..., Pi,..., Pn) ou au réservoir (T; T1, T2,..., Ti,..., Tn) de l'installation de traitement, et la section d'extrémité raccordée à l'arbre distributeur à soupapes (B1, B2,..., Bi, ..., Bn) du raccord de tuyauterie (R; R1, R2, ..., Ri, ..., Rn) s'étend perpendiculairement ou horizontalement ou inclinée dans un sens ou dans l'autre,
la soupape à double siège respective (V_{R}) est agencée dans chaque raccord entre la conduite (2.1, 2.2, ..., 2.i, ..., 2.n; 3.1, 3.2, ..., 3.1, ..., 3.n; 4) et l'orifice de raccordement associé (6a), et connecte ce raccord à proximité immédiate de la structure creuse (B1a, B2a, ..., Bia,..., Bna),
**caractérisé en ce que**
la soupape à double siège (V_{R}) est équipée de deux éléments de fermeture montés en série (10, 11) qui évitent dans la position de fermeture de la soupape le débordement des fluides de la structure creuse (B1a, B2a, ..., Bia,..., Bna) dans un compartiment de soupapes (7; 7*), chacune des conduites (2.1, 2.2, ..., 2.i,..., 2.n; 3.1, 3.2, ..., 3.1, ..., 3.n; 4) étant raccordée à ce dernier,
les éléments de fermeture (10, 11) délimitent dans la position de fermeture, mais aussi dans la position d'ouverture, une cavité de fuite (14) qui présente au moins une voie de communication avec l'environnement de la soupape à double siège (V_{R}),
le premier élément de fermeture (10) est commandé indépendamment et vient en contact étanche, lors de son mouvement d'ouverture, avec le second élément de fermeture (11) en forme de plateau de siège et transfère celui-ci de manière identique dans la position d'ouverture,
le second élément de fermeture (11) se présente sous forme de barre creuse qui comporte à son extrémité dirigée vers le premier élément de fermeture (10) un second joint de siège (13) qui coopère avec une seconde surface de siège (6c) adjacente à une première surface de siège cylindrique (6b),
le premier élément de fermeture (10) conçu sous forme de piston à coulisse présente un premier joint de siège (12) agissant radialement qui est reçu de manière étanche, dans la position de fermeture de la soupape, dans la première surface de siège (6b) qui forme l'orifice de raccordement (6a),
le second élément de fermeture (11) en forme de barre creuse présente sur sa section d'extrémité recevant le second joint de siège (13) côté intérieur un perçage de positionnement cylindrique (11b) qui présente un diamètre identique à celui de la première surface de siège cylindrique (6b),
dans la position de fermeture du second élément de fermeture (11), le perçage de positionnement (11b) et la première surface de siège (6b) se confondent de manière affleurante,
le second élément de fermeture (11) avec une surface de butée côté élément de fermeture (11g) dispose d'une butée métallique sur la seconde surface de siège (6c), et une surface de butée (6e) côté surface de siège associée étant directement adjacente à la première surface de siège (6b),
des tiges de manoeuvré (10a, 11a) agencées concentriquement les unes dans les autres sont prévues pour les éléments de fermeture (10, 11) qui traversent unilatéralement le compartiment de soupapes (7; 7*) et ressortent de celle-ci.

2. Système de tuyauterie selon la revendication 1,
**caractérisé en ce que**
l'arbre distributeur à soupapes (B1, B2,...Bi, ..., Bn) présente un tracé généralement vertical ascendant de bas en haut, et **en ce que** les premier et second groupes de conduites (2.1, 2.2, .., 2.i,..., 2.n; 3.1, 3.2, ..., 3.1, ..., 3.n) sont agencés (2.1, 3.1; 2.2, 3.2; ..., 2.i,3i, ..., 2.n , 3.n) dans une disposition de rangées les unes sous les autres et dans des plans parallèles les uns aux autres et par rapport à l'axe longitudinal de la structure creuse.

3. Système de tuyauterie selon la revendication 1,
**caractérisé en ce que**
l'arbre distributeur à soupapes (B1, B2,..., Bi, ..., Bn) s'étend transversalement, généralement horizontalement, et **en ce que** les premier et second groupes de conduites (2.1, 2.2, ..., 2.i, ..., 2.n; 3.1, 3.2, ..., 3.1, ..., 3.n) sont agencés les uns à côté des autres respectivement dans des plans parallèles entre eux, et sur une face ou sur des faces opposées de la structure creuse (B1a, B2a, ..., Bia, ..., Bna), sont dirigés devant celle-ci et dans des plans croisant son axe longitudinal (L).

4. Système de tuyauterie selon une des revendications 1 à 3,
**caractérisé en ce que**
la soupape à double siège (V_{R}) est soumise à un nettoyage de siège par une course partielle respective (H1, H2) de ses éléments de fermeture (10, 11).

5. Système de tuyauterie selon la revendication 4,
**caractérisé en ce que**
le nettoyage de siège du premier élément de fermeture (10) est assuré par la première course partielle (H1) dans la direction opposée à celle du mouvement d'ouverture avec une course d'ouverture (H) et celui du second élément de fermeture (11) est assuré par la seconde course partielle dans la même direction (H2), et **en ce que** dans chaque position de nettoyage de siège, une première fente d'étranglement (D1) côté espace de fuite est fournie sur le premier élément de fermeture (10) et une seconde fente d'étranglement (D2) opposée à l'espace de fuite est fournie sur le second élément de fermeture (11).

6. Système de tuyauterie selon une des revendications 1 à 5,
**caractérisé en ce que**
la structure creuse (B1a, B2a, ..., Bia,..., Bna) se présente dans la zone de pourtour de son orifice de raccordement (6a) sous forme de boîtier annulaire (6) qui reçoit les surfaces de siège (6b, 6c) et sert au raccordement du compartiment de soupapes (7; 7*).

7. Système de tuyauterie selon une des revendications 1 à 6,
**caractérisé en ce que**
le second élément de fermeture (11) conçu sous forme de barre creuse est cylindrique sur sa surface périphérique externe (11e).

8. Système de tuyauterie selon la revendication 7,
**caractérisé en ce que**
le second élément de fermeture (11) débouche dans un boîtier de fuite et de purge (8) qui est raccordé, sur la face, opposée au boîtier annulaire (6), du compartiment de soupapes (7; 7*), à ce dernier, y est guidé et étanchéisé.

9. Système de tuyauterie selon la revendication 8,
**caractérisé en ce que**
le second élément de fermeture (11) dépasse dans la zone de l'espace interne du boîtier de fuite et de purge (8) sur la seconde tige de manoeuvre de diamètre inférieur, et une liaison perméable aux fluides entre l'espace interne du second élément de fermeture (11) et l'espace interne de la seconde tige de manoeuvre (11a) cylindrique creuse est fournie via au moins une traverse (11f) orientée essentiellement radialement.

10. Système de tuyauterie selon les revendications 8 ou 9,
**caractérisé en ce que**
les tiges de manoeuvre (10a, 11a) sur la face opposée au compartiment de soupapes (7; 7*) du boîtier de fuite et de purge (8) sont guidées à travers et hors de ce dernier.

11. Système de tuyauterie selon une des revendications 8 à 10,
**caractérisé en ce que**
la cavité de fuite (14) est reliée, par un perçage de purge délimité par une surface périphérique interne (11c) du second élément de fermeture (11), à à l'espace interne du boîtier de fuite et de purge (8) qui débouche dans un raccord de purge (8a).

12. Système de tuyauterie selon une des revendications 1 à 11,
**caractérisé en ce que**
un raccord tubulaire (7a; 7a*) sur le compartiment de soupapes (7; 7*), par rapport à la position d'agencement du compartiment de soupapes (7; 7*), débouche tangentiellement avec sa ligne périphérique interne inférieure au point le plus bas de l'espace interne du compartiment de soupapes (7; 7*).

13. Système de tuyauterie selon une des revendications 1 à 12,
**caractérisé en ce que**
par rapport à la position d'agencement, l'axe longitudinal du compartiment de soupapes (7; 7*) s'étend horizontalement ou, vu depuis l'orifice de raccordement (6a), se réduit jusqu'à un angle à l'horizontale, et **en ce qu'**une paroi périphérique interne (11c) de la cavité de fuite (14) présente une inclinaison sur la face de gravité vers son orifice d'échappement.

14. Système de tuyauterie selon une des revendications 1 à 13,
**caractérisé en ce que**
dans un boîtier lanterne (9) rattaché au boîtier de fuite et de purge (8) est disposé un raccord d'agent de nettoyage (27) qui est en connexion avec une fente annulaire (26) formée entre les tiges de manoeuvre (10a, 11a), cette fente annulaire débouchant à son extrémité opposée au raccord d'agent de nettoyage (27) via une buse de nettoyage (15; 15a, 15b) dans la cavité de fuite (14).

15. Système de tuyauterie selon une des revendications 1 à 14,
**caractérisé en ce que**
au niveau de la tige de manoeuvre (10a) est prévue radialement vers l'extérieur une première butée annulaire (10b) qui coopère, au cours du mouvement d'ouverture de la soupape, avec une seconde butée annulaire (11d) correspondante sur la face interne de la seconde tige de manoeuvre (11a), et ici au moment de l'entraînement du second élément de fermeture (11) par le premier élément de fermeture (10).

16. Système de tuyauterie selon une des revendications 1 à 15,
**caractérisé en ce que**
la conduite (2.1, 2.2, ..., 2.i,..., 2.n; 3.1, 3.2, ..., 3.1, ..., 3.n; 4) est réalisée continue, avec une section transversale de passage non obstruée de forme circulaire, est dirigée devant un compartiment de soupapes (7; 7*) respectif de la soupape à double siège (VR) et est reliée à cette dernière de manière à permettre le passage de fluides.

17. Système de tuyauterie selon une des revendications 1 à 16,
**caractérisé en ce que**
la structure creuse (B1a, B2a,..., Bia,..., Bna) se présente sous forme de tuyau cylindrique.

18. Système de tuyauterie selon une des revendications 1 à 17,
**caractérisé en ce que**
l'extrémité inférieure, opposée à chaque réservoir (T1, T2, ..., T i,..., Tn) ou à chaque raccord de tuyauterie (R; R1, R2, ..., Ri, .., Rn), de la structure creuse (B1a, B2a,..., Bia,..., Bna) est reliée à un troisième système de tuyau (4).

19. Système de tuyauterie selon une des revendications 1 à 18,
**caractérisé en ce que**
les conduites (2.1, 2.2, ..., 2.i,..., 2.n; 3.1, 3.2, .., 3.1, ..., 3.n; 4) sont réalisées respectivement sous forme de conduites continues associées à toutes les conduites (R; R1, R2, ..., Ri, ..., Rn) de même fonction.

20. Système de tuyauterie selon une des revendications 1 à 19,
**caractérisé en ce que**
les arbres distributeurs à soupapes (B1, B2,..., Bi,..., Bn) présentent une disposition en forme de rangées ou de matrices.

21. Système de tuyauterie selon une des revendications 1 à 20,
**caractérisé en ce que**
la structure creuse (B1a, B2a,..., Bia,..., Bna) est composée respectivement d'une agrégation de différentes sections de structure (5) qui sont reliées les unes aux autres, de manière à permettre le passage de fluides, en direction de l'axe longitudinal (L) de la structure creuse et présentent chacune au moins un orifice de raccordement (6a).

22. Système de tuyauterie selon la revendication 21,
**caractérisé en ce que**
les sections de structure (5) se présentent sous la forme de parties de boîtier (Bia.1 à Bia.m) de différentes tailles.

23. Système de tuyauterie selon la revendication 22,
**caractérisé en ce que**
l'orifice de raccordement (6a) présente une section transversale de passage qui dépend de la taille de chaque partie de boîtier (Bia.1 à Bia.m) associée.
